# FASCICULE DE BREVET EUROPEEN

(11) **EP 1 934 471 B1**
(45) Date de publication et mention de la délivrance du brevet: **11.08.2010**
(21) Numéro de dépôt: 06831257.8
(22) Date de dépôt: 02.10.2006
(51) Int. Cl.: F03C 1/04, F04B 49/00, B60T 10/04

(54) **DISPOSITIF DE GESTION DE LA CYLINDREE D'UN MOTEUR HYDRAULIQUE OU D'UN GROUPE DE MOTEURS HYDRAULIQUES**
VORRICHTUNG ZUR HANDHABUNG DER VERSTELLUNG EINES HYDRAULISCHEN MOTORS ODER EINER GRUPPE HYDRAULISCHER MOTOREN
DEVICE FOR MANAGING THE DISPLACEMENT OF A HYDRAULIC MOTOR OR A GROUP OF HYDRAULIC MOTORS

(30) Priorité: 03.10.2005 FR 0510076
(43) Date de publication de la demande: 25.06.2008
(73) Titulaire: POCLAIN HYDRAULICS INDUSTRIE, 60411 Verberie (FR)
(72) Inventeur: LEMAIRE, Gilles, F-60280 Margny Les Compiegnes (FR); SOUPLY, Jean-Pierre, F-60300 Senlis (FR)
(74) Mandataire: Intes, Didier Gérard André
(86) Numéro de dépôt international: PCT/FR2006/050971
(87) Numéro de publication internationale: WO 2007/042703

(56) Documents cités:
- FR-A- 2 836 960
- US-A- 3 932 992
- US-B1- 6 318 235
- US-B1- 6 338 247

## Description

La présente invention concerne un dispositif de gestion du fonctionnement d'un moteur hydraulique ayant au moins deux cylindrées actives de fonctionnement et apte à être relié à deux conduites principales, respectivement d'alimentation et d'échappement, le moteur comprenant deux séries de conduits de distribution ayant chacune un premier et un deuxième groupe de conduits de distribution, le dispositif de gestion comprenant un sélecteur de cylindrée apte à occuper au moins une position de grande cylindrée dans laquelle les premiers groupes de conduits de distribution des première et deuxième série sont reliés à l'une des conduites principales, tandis que les deuxièmes groupes de conduits de distribution des première et deuxième série sont reliés à l'autre conduite principale, ainsi qu'une configuration de petite cylindrée dans laquelle le premier groupe de conduits de distribution de la première série est relié à l'une des conduits principales, tandis que le deuxième groupe de conduits de distribution de la première série est relié à l'autre conduite principale et qu'une liaison de by-pass existe entre le premier groupe de conduits de distribution de la deuxième série et le deuxième groupe de conduits de distribution de la deuxième série.

Le moteur hydraulique auquel s'applique le dispositif de gestion de l'invention sert par exemple à l'entraînement en translation d'un engin ou à l'entraînement d'un outil porté par un engin.

De manière générale, la vitesse requise pour de tels moteurs hydrauliques est de plus en plus élevée, en particulier pour assurer de manière rapide le transfert de l'engin entre deux sites d'utilisation de ce dernier, ou bien le transfert de l'outil entre deux positions de travail. Ces moteurs doivent donc pouvoir à la fois générer un fort couple, pour pouvoir correctement assurer les fonctions de l'engin ou de l'outil en conditions de travail, et pouvoir présenter une vitesse de sortie élevée, pour les raisons indiquées ci-dessus.

Pour atteindre ces deux objectifs, il serait possible d'assurer l'alimentation d'un moteur hydraulique avec une pompe de dimensions très importantes, permettant en particulier de délivrer un débit de fluide élevé pour entraîner le moteur à vitesse élevée dans une cylindrée permettant l'obtention d'un fort couple de sortie. Toutefois, il serait extrêmement coûteux d'être ainsi contraint de surdimensionner les pompes et, de plus, il est fréquemment demandé de limiter le bruit et la consommation des moteurs d'entraînement de telles pompes, qui sont en général des moteurs thermiques de type Diesel ou des moteurs à gaz, ce qui est contradictoire avec un tel surdimensionnement.

Ainsi, il devient nécessaire de permettre au moteur hydraulique de développer un couple élevé et de fonctionner à grande vitesse en fonction des besoins, sans surdimensionner les pompes qui servent à alimenter ces moteurs ni les moteurs thermiques d'entraînement de ces pompes.

Pour ces raisons, le moteur hydraulique auquel s'applique l'invention présente deux cylindrées distinctes de fonctionnement, en particulier une grande cylindrée développant un fort couple pour le travail de l'engin ou de l'outil entraîné par ce moteur, et une petite cylindrée qui permet un fonctionnement à plus grande vitesse. Les contraintes évoquées ci-dessus font que la petite cylindrée est en général très notablement diminuée par rapport à la grande cylindrée, le moteur développant un faible couple dans cette petite cylindrée. En particulier, le moteur peut même présenter trois cylindrées, voire davantage, la plus petite cylindrée étant utilisée pour assurer un déplacement rapide de l'engin ou de l'outil entraîné par ce moteur.

On sait que le freinage d'un tel moteur hydraulique peut, au moins en partie, s'effectuer de manière hydrostatique, par une montée en pression dans les conduits d'échappement. L'efficacité du freinage hydrostatique dépend évidemment du couple développé par le moteur. Toutefois, comme indiqué précédemment, dans leur plus petite cylindrée, utilisée pour les déplacements rapides, les moteurs développent un couple relativement peu élevé, de sorte que l'efficacité du freinage hydrostatique risque de ne pas être assurée en petite cylindrée.

De plus, comme il a également été indiqué précédemment, on cherche à utiliser, pour l'entraînement de la pompe d'alimentation du moteur hydraulique, un moteur thermique le moins bruyant et le plus petit possible. Il s'agit souvent d'un moteur Diesel équipé de turbocompresseur.

Lors du freinage hydrostatique, la pression monte dans la branche retour de la pompe, jusqu'à devenir supérieure à la pression dans la branche de refoulement, utilisée pour l'alimentation du moteur. En conséquence, le moteur hydraulique devient pompe et la pompe devient motrice, ayant ainsi tendance à entraîner le moteur thermique qui sert normalement à son entraînement. L'efficacité du freinage hydrostatique dépend alors du couple de retenue pouvant être développé par ce moteur thermique. Toutefois, l'utilisation de moteurs thermiques peu bruyants et peu encombrants limite évidemment le couple de retenue et la vitesse de rotation qu'ils sont capables de fournir. En conséquence, le freinage hydrostatique peut soumettre le moteur utilisé normalement pour l'entraînement de la pompe à des contraintes pour lesquelles celui-ci n'est pas adapté.

Egalement pour cette raison, le freinage hydrostatique risque de ne pas être correctement assuré et/ou, d'endommager certains composants de la transmission. US 6 338 247 propose, pour limiter les risques d'endommagement du moteur thermique d'entraînement de la pompe lors d'un freinage hydrostatique, d'équiper le circuit d'alimentation du moteur hydraulique avec des valves de retenue, qui sont normalement ouvertes mais qui se referment partiellement lorsque la pression dans la branche retour augmente trop sous l'effet du freinage hydrostatique. Cette fermeture partielle occasionne une perte de charge dans la branche retour et évite que la pompe ne soit soumise à des pressions trop élevées et que le moteur d'entraînement de cette pompe ne soit soumis à des contraintes trop élevées.

Ces valves sont installées sur les conduites principales du circuit, ou au moins sur celle de ces conduites qui sert à l'échappement du moteur en marche avant. De plus, si le moteur est en petite cylindrée active, le couple de freinage est faible et le freinage est peu efficace. En fait, ce système vise à éviter un endommagement de la pompe et de son moteur d'entraînement, mais il ne résout pas le problème du freinage insuffisant en petite cylindrée.

US 6,318,235 (qui décrit le préambule de la revendication 1) propose, pour réduire les phénomènes de freinage brutal ou d'accélération brutale lors du passage de la petite cylindrée à la grande cylindrée, ou inversement, de faire en sorte que, lors du passage du sélecteur de cylindrée de l'une à l'autre de ses positions stables (de petite ou de grande cylindrée) il existe une phase intermédiaire durant laquelle les différents conduits de distribution communiquent entre eux.

US 3,932,992 propose d'associer, pour l'entraînement d'un moteur hydraulique, un circuit fermé et un circuit ouvert. Un limiteur de débit est placé sur le circuit ouvert pour éviter l'emballement du moteur. Dans le cas où le moteur est à deux cylindrées, le limiteur de débit permet de ralentir l'arbre du moteur lors du passage en grande cylindrée pour éviter un freinage brutal.

L'invention a pour but de remédier aux inconvénients précités en proposant un dispositif de gestion du fonctionnement d'un moteur hydraulique qui permette, malgré les contraintes évoquées ci-dessus, d'assurer un freinage hydrostatique dans de bonnes conditions, pour une installation simple.

Ce but est atteint grâce au fait que le dispositif de l'invention comprend des moyens de restriction susceptibles, dans la configuration de petite cylindrée du sélecteur de cylindrée, de restreindre ladite liaison de by-pass, alors que le premier groupe de conduits de distribution de la première série est relié à l'une des conduites principales et que le deuxième groupe de conduits de distribution de la première série est relié à l'autre conduite principale en étant isolé du premier groupe de conduits de distribution de la première série.

Dans la configuration de petite cylindrée, seuls les conduits de distribution de la première série contribuent normalement à délivrer le couple moteur, puisque les premier et deuxième groupes de ces conduits sont reliés aux deux conduites principales différentes. Ainsi, la petite cylindrée du moteur correspond à celle des cylindres reliés à ces conduits de distribution de la première série. En revanche, les premiers et deuxièmes groupes de conduits de distribution de la deuxième série sont normalement by-passés en étant reliés entre eux et sont donc à la même pression, de sorte que la cylindrée partielle correspondante est inactive.

Selon l'invention, en particulier lorsqu'un couple de freinage hydrostatique complémentaire à celui qui serait possible en utilisant seulement la petite cylindrée est nécessaire, la liaison de by-pass précitée peut être restreinte. Les premier et deuxième groupes de conduits de distribution de la deuxième série sont donc mis à des pressions différentes, générant ainsi un couple de retenue complémentaire qui s'ajoute au couple généré par cette petite cylindrée active permettant ainsi l'obtention du couple de freinage hydrostatique souhaité, sans augmenter la pression de retenue à la pompe. En même temps, le moteur reste actif en petite cylindrée puisque les premier et deuxième groupes de conduits principaux de la première série restent respectivement reliés à chacune des deux conduites principales. Au total, le couple de retenue obtenu est donc supérieur à celui que permettrait la petite cylindrée, sans restriction de la liaison de by-pass. Le freinage hydrostatique souhaité est donc obtenu sans sollicitation excessive du moteur d'entraînement de la pompe et en dissipant l'énergie de freinage dans le moteur hydraulique, du fait de la liaison de by-pass restreinte.

Le dispositif selon l'invention agit sélectivement sur la petite cylindrée, c'est à dire dans la configuration de grande vitesse où le besoin d'un couple de freinage de retenue complémentaire existe.

On peut choisir d'intégrer le dispositif de l'invention au moteur, auquel cas il agit directement au niveau des conduits de distribution, ce qui permet un arrangement compact.

En variante, le dispositif de l'invention peut être extérieur au moteur, en agissant sur la liaison entre les conduits principaux du moteur et les conduites principales du circuit. Dans ce dernier cas, le dispositif de l'invention peut même être commun à plusieurs moteurs, par exemple deux moteurs d'un même essieu d'un véhicule.

Avantageusement, le dispositif comprend un sélecteur de by-pass disposé dans la liaison de by-pass apte, à partir d'une première position dans laquelle il permet une liaison de by-pass sensiblement libre, à être déplacé pour restreindre ladite liaison par une restriction.

Dans sa première position, le sélecteur de by-pass peut ainsi permettre un fonctionnement normal en petite cylindrée, tandis qu'il peut être déplacé pour restreindre la liaison de by-pass lorsqu'un freinage hydrostatique est nécessaire alors que le moteur fonctionne à petite cylindrée.

Avantageusement, la liaison de by-pass comprend un premier tronçon de liaison apte à être relié au premier groupe de conduits de distribution de la deuxième série et un deuxième tronçon de liaison apte à être relié au deuxième groupe de conduits de distribution de la deuxième série, et le sélecteur comprend un tiroir mobile disposé dans un alésage présentant au moins une première et une deuxième ouverture respectivement reliées avec le premier et avec le deuxième tronçon de liaison de telle sorte que le tiroir est apte, selon sa position, à établir une communication sensiblement libre ou une communication restreinte entre lesdits tronçons. Ces tronçons de liaison peuvent être intérieurs au moteur, dans le cas où le dispositif de l'invention est intérieur au moteur. Dans le cas contraire, ces tronçons de liaison sont reliés aux groupes de conduits de distribution respectifs par l'intermédiaire des conduits principaux du moteur, auxquels sont reliés ces conduits de distribution.

Le sélecteur est ainsi de constitution simple et sa commande entre ses différentes positions est aisée.

Avantageusement, le dispositif comporte un sélecteur de cylindrée apte à occuper une position de grande cylindrée dans laquelle les premiers groupes de conduits de distribution sont aptes à communiquer entre eux tandis que les deuxièmes groupes de conduits de distribution sont aptes à communiquer entre eux et à occuper une position de petite cylindrée dans laquelle le premier groupe de conduits de distribution de la deuxième série est apte à communiquer avec au moins le deuxième groupe de conduits de distribution de la deuxième série. Le sélecteur de cylindrée peut être intérieur ou extérieur au moteur voire, dans ce dernier cas, être commun à plusieurs moteurs.

Avantageusement, lesdits deuxièmes groupes de conduits de distribution sont aptes à communiquer entre eux dans les deux positions du sélecteur de cylindrée.

Selon un premier mode de réalisation, le sélecteur de cylindrée et le sélecteur de by-pass sont deux sélecteurs distincts, et dans sa position de petite cylindrée, le sélecteur de cylindrée est apte à établir la liaison de by-pass dans laquelle est disposé le sélecteur de by-pass.

Le sélecteur de cylindrée peut être réalisé et commandé de manière classique, tandis que le sélecteur de by-pass est commandé seulement lorsqu'une restriction de la liaison de by-pass est nécessaire, en particulier pour assurer un freinage hydrostatique en petite cylindrée.

Selon un autre mode de réalisation, le sélecteur de cylindrée et le sélecteur de by-pass forment un sélecteur commun, apte à occuper une position de petite cylindrée à by-pass restreint dans laquelle ledit sélecteur commun établit une communication restreinte entre le premier groupe de conduits de distribution de la deuxième série et le deuxième groupe de conduits de distribution de la deuxième série ou entre le premier groupe de conduits de distribution de la deuxième série et les deuxièmes groupes de conduits de distribution des première et deuxième séries.

Ce sélecteur commun présente l'avantage de permettre une réalisation extrêmement compacte.

Avantageusement, le sélecteur commun comprend un tiroir mobile dans un alésage présentant au moins une première ouverture reliée au premier groupe de conduits de distribution de la première série, une deuxième ouverture reliée au premier groupe de conduits de distribution de la deuxième série et une troisième ouverture reliée au deuxième groupe de conduits de distribution d'au moins la deuxième série ; dans la position de grande cylindrée, ledit sélecteur commun établit une communication entre lesdites première et deuxième ouvertures en isolant ces dernières de la troisième ouverture ; dans la position de petite cylindrée, le sélecteur commun établit une communication sensiblement libre entre les deuxième et troisième ouvertures en isolant ces dernières de la première ouverture et, dans la position de petite cylindrée à by-pass restreint, le sélecteur commun établit une communication restreinte entre les deuxième et troisième ouvertures en isolant ces dernières de la première ouverture.

Avantageusement, la position de cylindrée à by-pass restreint est une position du sélecteur commun qui est intermédiaire entre les positions de grande et de petite cylindrée dudit sélecteur commun.

Dans ce cas, la réalisation et la commande du sélecteur commun peuvent être particulièrement simples puisque, à partir de la position de petite cylindrée non restreinte dans laquelle la liaison de by-pass est totalement libre, cette liaison est restreinte dans la position intermédiaire puis, lorsque le sélecteur continue son déplacement, la liaison de by-pass peut disparaître pour assurer un fonctionnement en grande cylindrée.

Avantageusement, la restriction de la liaison de by-pass varie progressivement, selon la position du sélecteur de by-pass.

La restriction de la liaison de by-pass peut ainsi être dosée, en particulier en fonction du couple de freinage hydrostatique nécessaire.

Avantageusement, les deuxièmes groupes de conduits de distribution des première et deuxième série sont reliés entre eux en permanence, et le sélecteur de by-pass comprend un tiroir mobile dont les moyens de commande du déplacement comprennent d'une part une chambre de commande reliée au premier groupe de conduits de distribution de la deuxième série et d'autre part un ressort de rappel d'effet antagoniste à celui de la pression dans ladite chambre.

Ainsi, en fonction du tarage du ressort de rappel, la liaison de by-pass peut être automatiquement restreinte lorsque la pression dans les deuxièmes groupes de conduits de distribution reliés entre eux augmente, sous l'effet d'un freinage hydrostatique.

Avantageusement, le dispositif comprend un clapet anti-retour apte à permettre une liaison non restreinte entre lesdits premier et deuxième tronçons dans le sens de circulation du fluide à partir du premier groupe de conduits de distribution de la deuxième série vers les deuxièmes groupes de conduits de distribution.

En particulier lorsque le moteur présente un sens préférentiel de fonctionnement, un tel clapet anti-retour est avantageux pour permettre de court-circuiter la restriction en petite cylindrée, dans le sens de circulation du fluide correspondant au sens non préférentiel de fonctionnement du moteur.

Avantageusement, le dispositif comporte un frein mécanique du moteur et des moyens de commande du freinage du moteur aptes, lorsque le moteur est en petite cylindrée de fonctionnement, à commander successivement une restriction de la liaison de by-pass et une activation du frein mécanique.

Lorsqu'il est nécessaire de freiner l'engin ou l'outil entraîné par le moteur, on commence ainsi par assurer un freinage hydrostatique puis, si nécessaire, un freinage complémentaire par activation du frein mécanique.

Avantageusement, le dispositif comporte des moyens de commande du freinage du moteur aptes, en fonction d'une commande de freinage et de paramètres de fonctionnement du moteur, à commander une première étape de freinage dans laquelle le débit dé fluide dans les conduites principales est modifié (en particulier en étant diminué par une réduction de la cylindrée inférieure de la pompe) et, en fonction de la situation de fonctionnement du moteur à l'issue de cette première étape, à commander au moins une deuxième étape de freinage dans laquelle la liaison de by-pass est restreinte, ce qui permet en particulier de limiter la pression maximum dans la branche de retour.

Avantageusement, le dispositif comporte des moyens de commande de la position du sélecteur de by-pass aptes, lors d'une commande de freinage, à commander le déplacement dudit sélecteur de manière à asservir une variable représentative du fonctionnement d'un véhicule entraîné par le moteur selon une consigne.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 est une vue en coupe axiale d'un moteur hydraulique équipé d'un dispositif de gestion selon l'invention, selon le premier mode de réalisation ;
- la figure 2 est une vue en coupe selon la ligne II-II de la figure 1 ;
- la figure 3 est une vue agrandie du détail III de la figure 1, dans une configuration de by-pass non restreint ;
- la figure 4 est une vue analogue à la figure 3, montrant une configuration de by-pass restreint ;
- la figure 5 est une vue analogue à la figure 4, montrant une variante de réalisation de la valve de by-pass ;
- la figure 6 est une vue analogue à la figure 1 pour le deuxième mode de réalisation ;
- les figures 7A à 7C illustrent, en vue schématique en coupe axiale, le deuxième mode de réalisation de l'invention, utilisant un sélecteur commun pour la sélection de la cylindrée et le by-pass ;
- la figure 8 est une vue partielle du sélecteur des figures 6 à 7C, pour une variante de réalisation ; et
- la figure 9 montre un circuit utilisant un dispositif conforme à l'invention, pour deux moteurs.

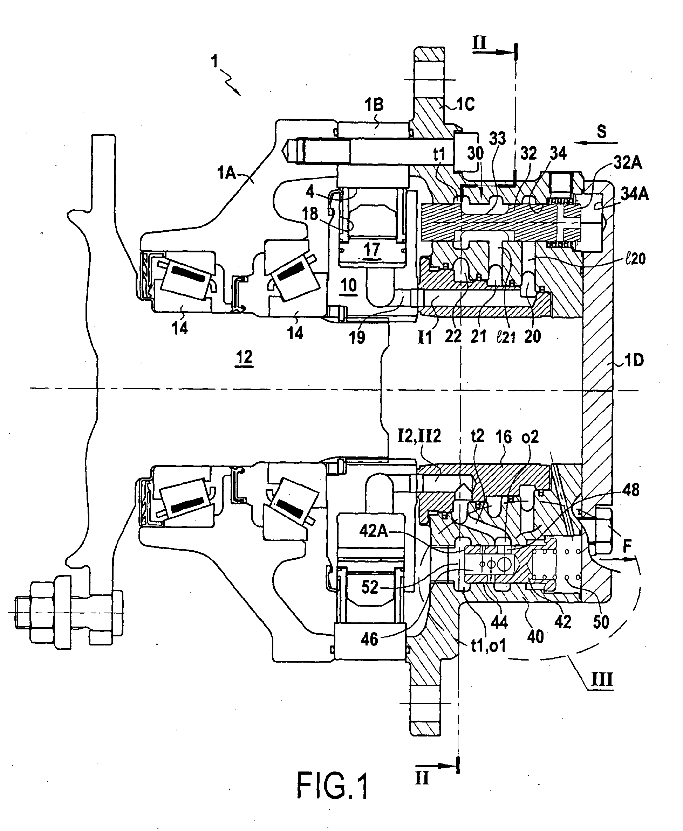

Le moteur 1 de la figure 1 comprend un carter en quatre parties 1A, 1B, 1C et 1D à l'intérieur duquel est monté rotatif un bloc-cylindres 10, apte à entraîner en rotation un arbre 12, supporté par rapport à la partie 1A du carter par des paliers 14. A l'intérieur de la partie 1C du carter est disposé un distributeur interne 16 ayant des conduits de distribution avec lesquels les cylindres 18 du bloc-cylindres peuvent être successivement mis en communication par leurs conduits de cylindres 19, au cours de la rotation du bloc-cylindres, le distributeur étant fixe en rotation par rapport au carter. Les pistons 17 du bloc-cylindres 10 sont en appui contre la came ondulée 4, formée à la périphérie interne de la partie 1B du carter. Bien que le moteur représenté soit du type à carter fixe et à arbre tournant, l'invention s'applique également aux moteurs à carter tournant.

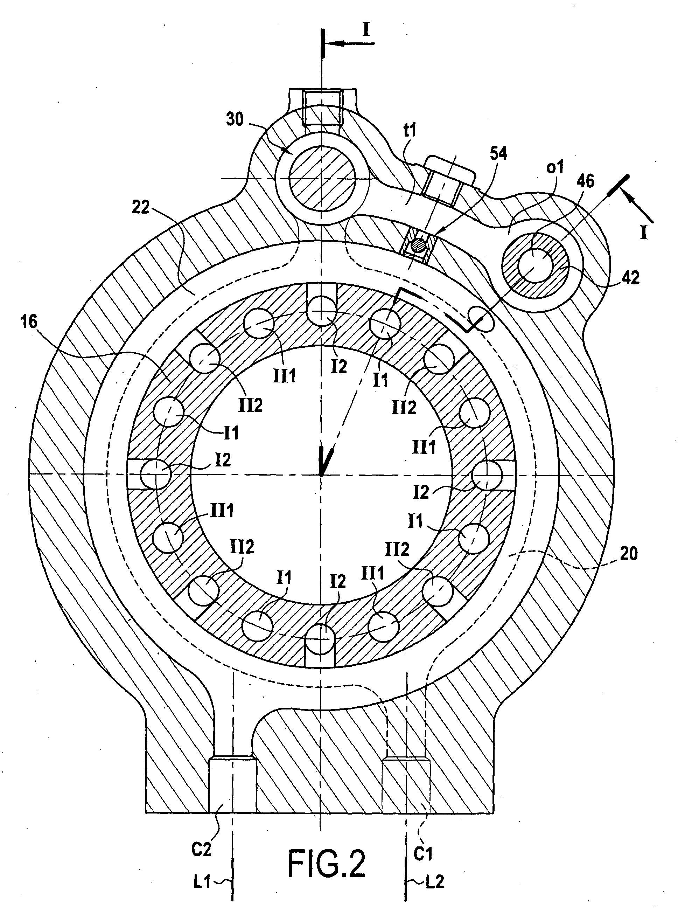

Le moteur comprend au moins deux conduits principaux C1 et C2 (voir figure 2), servant respectivement à l'alimentation et à l'échappement du moteur. Pour un circuit fermé, ces conduits principaux sont respectivement reliés à l'orifice de refoulement et à l'orifice d'aspiration d'une pompe par deux conduites principales L1, L2 respectives. Dans le cas d'un circuit fermé, la liaison entre les conduits principaux du moteur et les conduites principales du circuit est en général directe. Dans le cas d'un circuit ouvert, cette liaison est en général réalisée par un sélecteur principal, qui peut être commandé pour inverser cette liaison et, en conséquence, inverser le sens de rotation du rotor du moteur.

En l'espèce, le moteur représenté comporte trois gorges de distribution, respectivement 20, 21 et 22.

Pour pouvoir fonctionner avec ses deux cylindrées distinctes, le moteur présente deux séries de conduits de distribution ayant chacune deux groupes de conduits. Ainsi, si l'on se reporte à la figure 2, on voit une coupe dans le distributeur 16, qui permet de visualiser les différents conduits de distribution et qui est faite en passant par la gorge 22, tandis qu'on a indiqué en trait interrompu la gorge 20. Sur cette coupe, on a indiqué par la référence I1 les conduits de distribution du premier groupe de la première série, par la référence I2 les conduits de distribution du deuxième groupe de la première série, par la référence II1 les conduits de distribution du premier groupe de la deuxième série et par la référence II2 ceux du deuxième groupe de la deuxième série.

Ainsi, les conduits de distribution I1 sont reliés en permanence à la gorge 20 du distributeur, les conduits II1 sont reliés à la gorge 21, et les conduits I2 ainsi que les conduits II2 sont reliés à la gorge 22.

Par ailleurs, comme on le voit sur la figure 2, le premier conduit principal C1 est relié en permanence à la gorge 20, tandis que le deuxième conduit principal C2 est relié en permanence à la gorge 22.

Le moteur des figures 1 et 2 est équipé d'un sélecteur de cylindrée 30 comprenant un tiroir 32, qui est mobile dans un alésage axial 34 et qui présente une gorge de sélection 33. Les gorges 20 et 21 du distributeur sont reliées à l'alésage 34 en deux positions axialement distinctes, respectivement par un conduit de liaison 120 et par un conduit de liaison 121. Le sélecteur de cylindrée 30 est représenté sur la figure 1 dans sa position de petite cylindrée, dans laquelle la gorge 20 est isolée de la gorge 21. Ainsi, le premier groupe de conduits de distribution de la première série I1 est relié au conduit principal C1 en étant isolé des conduits II1 du premier groupe de la deuxième série. De son côté, la gorge 33 du tiroir 32 relie la gorge 21 à un premier tronçon de liaison de by-pass t1 qui s'ouvre également dans l'alésage 34. Les ouvertures des conduits de liaison 120, I21 et celles du tronçon t1 sont disposées l'une après l'autre dans l'alésage 34, dans le sens de déplacement S de ce dernier de sa position de grande cylindrée non représentée vers sa position de petite cylindrée.

On comprend que, lorsque le tiroir 32 est dans sa position de grande cylindrée, dans laquelle son extrémité 32A vient en butée contre le fond 34A de l'alésage 34, sa gorge 33 relie les gorges 20 et 21 du distributeur par les conduits de liaison respectifs I20 et 121. Dans ce cas, les premiers groupes de conduits de distribution des premières et deuxièmes séries I1, II1 sont reliés ensemble par cette gorge 33 et sont donc reliés au conduit principal C1, tandis que, par la gorge 22, les deuxièmes groupes de conduits de distribution des premières et deuxièmes séries I2, II2 sont reliés au conduit principal C2 en étant isolés des autres groupes de conduits de distribution.

Le tronçon de liaison de by-pass t1 sert, dans la position de petite cylindrée du sélecteur 30, à relier le premier groupe de conduits de distribution de la deuxième série II1 (qui est relié à la gorge 21) avec les deuxièmes groupes de distribution des premières et deuxièmes séries I2, II2 (qui sont reliés à la gorge 22).

En effet, le moteur de la figure 1 comprend un sélecteur de by-pass 40 qui est disposé dans une liaison de by-pass qui comprend, d'une part, le premier tronçon de liaison de by-pass t1 et, d'autre part, un deuxième tronçon de liaison de by-pass t2. Le sélecteur de by-pass comprend un tiroir mobile 42 qui est disposé dans un alésage 44 présentant une première ouverture o1 reliée avec le premier tronçon de liaison de by-pass t1 (voir en particulier figure 2) et une deuxième ouverture o2 reliée avec le deuxième tronçon de liaison t2.

Le premier tronçon de liaison t1 est apte à être relié au premier groupe de conduits de distribution de la deuxième série II1 par le sélecteur de cylindrée lorsque ce dernier est dans sa position de petite cylindrée puisque, comme indiqué précédemment, ces conduits de distribution II1 communiquent alors avec le tronçon t1 par la gorge 33 du tiroir 32. Comme on le voit sur la figure 1, le deuxième tronçon de liaison t2 est quant à lui relié à la gorge 22 du distributeur, ce qui lui permet d'être relié aux deuxièmes groupes de conduits de distribution I2, II2. Dans sa position de by-pass représentée sur la figure 1, le tiroir 42 du sélecteur de by-pass autorise une liaison non restreinte entre les tronçons t1 et t2. En conséquence, le premier groupe de conduits de distribution de la deuxième série II1 est alors relié sans restriction avec les deuxièmes groupes de conduits de distribution I2, II2, de sorte que le moteur fonctionne en petite cylindrée normale.

Le tiroir 42 présente un trou borgne 46 qui est relié en permanence à la première ouverture o1 et une série de perçages 48 qui sont disposés successivement le long du tiroir 42 de manière à relier le trou borgne 46 à la périphérie externe de ce tiroir. La section de ces perçages 48 va en décroissant le long du tiroir dans le sens allant vers l'ouverture o1.

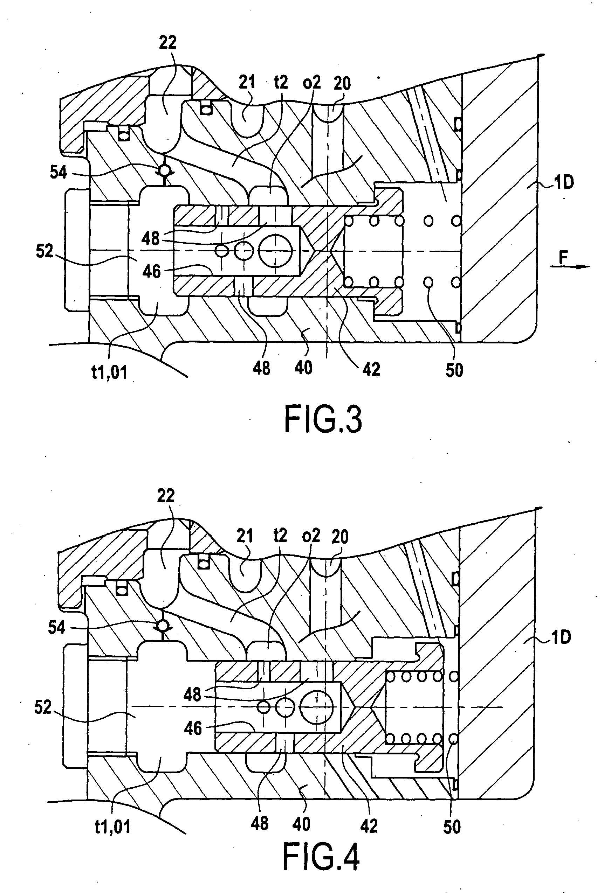

Sur les figures 1 et 3, le tiroir 42 occupe une première position dans laquelle au moins un perçage non restreint 48 est en regard avec la deuxième ouverture o2 pour établir ainsi, par l'intermédiaire du trou borgne 46, une communication sensiblement libre entre les ouvertures o1 et o2. Ce perçage non restreint est l'un des perçages 48 qui présente une section suffisamment importante pour ne pas créer de pertes de charge significatives lors de la circulation du fluide entre les ouvertures o1 et o2. On voit sur la figure 1 qu'il s'agit du perçage le plus large de la série de perçages 48. La première position du tiroir 42 est donc celle dans laquelle il autorise une liaison de by-pass non restreinte, permettant ainsi un fonctionnement du moteur en petite cylindrée lorsque le sélecteur 30 est dans la position de petite cylindrée.

A partir de cette première position, le tiroir 42 peut être déplacé dans le sens F de manière à occuper une deuxième position dans laquelle la périphérie externe de ce tiroir obture une partie de la deuxième ouverture o2 pour établir une communication restreinte entre les ouvertures o1 et o2. En l'espèce, comme le montre la figure 4, cette deuxième position est celle dans laquelle la communication entre les ouvertures o1 et o2 est réalisée par l'intermédiaire d'au moins un perçage 48 de section restreinte (l'un de ceux qui sont les plus proches de l'extrémité libre 42A du tiroir 42), choisi(s) de manière à occasionner une perte de charge significative lors de la circulation du fluide entre les ouvertures o1 et o2.

Ainsi, dans cette deuxième position, le sélecteur de by-pass restreint la liaison de by-pass nécessaire au fonctionnement du moteur en petite cylindrée.

Le sélecteur de by-pass 40 est en permanence sollicité vers sa position de by-pass non restreint par, en l'espèce, un ressort de rappel 50 qui sollicite en permanence le tiroir 42 dans le sens opposé au sens de déplacement F.

En l'espèce, sur le moteur de la figure 1, les deuxièmes groupes de conduits de distribution des premières et deuxièmes séries I2, II2 sont reliés entre eux en permanence par la gorge 22 et les moyens de commande du déplacement du tiroir 42 comprennent une chambre de commande 52 qui est reliée au premier groupe des conduits de distribution de la deuxième série II1 par l'intermédiaire du tronçon t1, du sélecteur 30 et de la gorge 21. Ces moyens de commande comprennent également le ressort de rappel précité, dont l'effet est antagoniste à celui de la pression dans la chambre 52.

En l'espèce, la chambre de commande 52 comprend la partie de l'extrémité de l'alésage 44 du sélecteur 40 dans laquelle s'ouvrent l'ouverture o1 et le trou borgne 46 du tiroir. Ainsi, quelle que soit la pression dans le deuxième conduit principal C2, on maintient une pression dans les premiers conduits de distribution II1 de la deuxième série au plus égale à la valeur correspondant au tarage du ressort 50. Cette valeur sera avantageusement ajustée, c'est-à-dire égale ou légèrement supérieure à la valeur de la pression de gavage du moteur.

Lorsque le moteur est du type représenté, c'est-à-dire comprenant seulement trois gorges de distribution pour deux cylindrées, il présente un sens préférentiel de fonctionnement dans lequel le deuxième conduit principal C2 auquel sont reliés le deuxième groupe de conduits de distribution de la première série et les deux groupes de conduits de distribution de la deuxième série en petite cylindrée est le conduit principal d'échappement. Les moyens de commande qui viennent d'être décrits permettent de faire en sorte que, alors que le moteur fonctionne en petite cylindrée dans son sens préférentiel et qu'un freinage hydrostatique est enclenché, provoquant ainsi une augmentation de la pression dans la branche de retour du circuit est relié au conduit principal C2 augmente, la liaison de by-pass soit automatiquement restreinte, de manière à ajouter au couple de freinage hydrostatique celui qui provient de la différence de pression ainsi créée entre le premier groupe de conduits de distribution de la deuxième série II1 et les deuxièmes groupes de conduits de distribution. En dehors d'une telle situation de freinage, la pression dans cette branche est normalement peu élevée puisque le conduit C2 sert à l'échappement dans le sens préférentiel.

Le dispositif selon l'invention comporte toutefois avantageusement un clapet anti-retour pour court-circuiter la restriction de la liaison de by-pass en particulier pour un fonctionnement du moteur en petite cylindrée et dans son sens non préférentiel de déplacement, la situation dans laquelle le conduit principal C2 sert à l'alimentation. En l'espèce, ce clapet anti-retour 54 est visible sur la figure 2. Il est disposé entre la gorge de distribution 22 et le premier tronçon de liaison de by-pass t1. Dans la mesure où, comme indiqué précédemment, le deuxième tronçon de liaison de by-pass t2 est relié en permanence avec la gorge 22, ce clapet anti-retour permet en fait de relier entre eux les tronçons t1 et t2. La disposition de ce clapet est telle qu'il permet seulement une circulation de fluide non restreinte ou sensiblement non restreinte dans le sens allant du premier tronçon de liaison de by-pass t1 (c'est-à-dire du premier groupe de conduits de distribution de la deuxième série II1) vers le deuxième tronçon de liaison de by-pass t2 (c'est-à-dire vers les deuxièmes groupes de conduits de distribution I2, II2).

En variante, on peut disposer sur une telle liaison un clapet commandé, par exemple une électrovalve, qui puisse être commandé par l'opérateur lorsque, alors que le moteur est en petite cylindrée, il fait fonctionner ce dernier dans son sens non préférentiel de fonctionnement.

Il faut noter que la présence d'un tel clapet est une variante préférentielle, mais qu'on pourrait également s'en abstenir si le fonctionnement du moteur en petite cylindrée (fonctionnement rapide) était tout simplement interdit en sens non préférentiel. Par exemple, la marche arrière d'un véhicule en fonctionnement rapide est rarement utile.

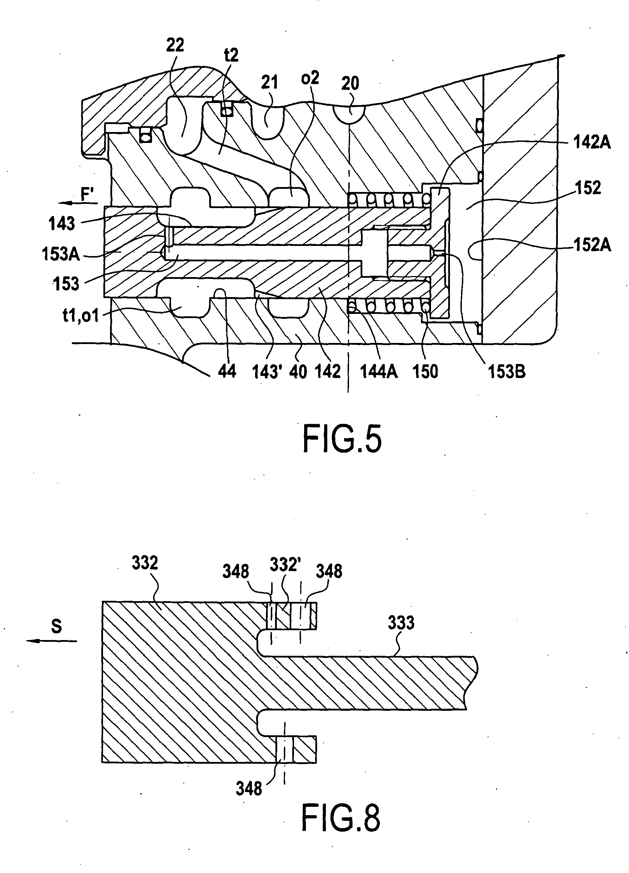

La figure 5 montre une variante de réalisation du tiroir du sélecteur de by-pass 40. Selon cette variante, le tiroir 142 de ce sélecteur, disposé dans l'alésage 44, présente à sa périphérie externe une gorge 143 dont le bord situé du côté de l'ouverture o1 du premier tronçon de liaison de by-pass t1 est pourvu de sifflets 143'. Ces sifflets sont réalisés sous la forme d'encoches dont la section va en décroissant dans le sens opposé au sens de déplacement F' du tiroir vers sa deuxième position dans laquelle la liaison de by-pass est restreinte.

Sur la figure 5, le tiroir 142 est représenté dans cette position de liaison de by-pass restreinte, et l'on voit que la liaison entre les premier et deuxième tronçons de liaison de by-pass t1 et t2 s'opère par les sifflets 143' qui autorisent seulement une circulation restreinte entre lesdits tronçons.

Dans cet exemple, les moyens de commande du déplacement du tiroir 142 comprennent une chambre de commande 152 réalisée à l'extrémité du tiroir opposée à l'ouverture o1. Cette chambre est alimentée par un conduit de pilotage 153 réalisé à l'intérieur du tiroir et communiquant, d'une part avec la gorge 143 par un perçage 153A et, d'autre part, avec la chambre de commande par un perçage 153B ménagé dans un bouchon 142A disposé à l'extrémité du tiroir 142. Ces moyens de commande comprennent également un ressort de rappel 150, qui est disposé entre un épaulement 144A de l'alésage et une partie de flasque du bouchon 142A qui fait face à cet épaulement. On comprend que le ressort sollicite en permanence le tiroir dans le sens opposé au sens F'.

Dans la position de by-pass non restreinte du sélecteur 40, le bouchon 142A est sensiblement disposé contre le fond 152A de la chambre de commande 152, sous l'effet du ressort 150. Dans cette situation, la gorge 143 est en regard de l'ouverture o2 et le conduit de pilotage 153, ainsi que la chambre 152 peuvent donc être alimentés par le fluide de la branche retour, provenant des deuxièmes groupes de conduits de distribution I2, II2 auxquels le tronçon t2 est relié en permanence par la gorge 22. Ainsi, lorsque la pression dans la branche retour, c'est-à-dire dans ces conduits I2, II2 surmonte le tarage du ressort 150, le tiroir peut être déplacé dans le sens F' pour restreindre la liaison de by-pass et ainsi maintenir la pression en aval de ce tiroir, c'est-à-dire dans le tronçon t1 relié au premier groupe de conduit de distribution II1 de la deuxième série, au niveau du tarage du ressort 150. Les sifflets 143' ayant une section progressive, la restriction de la liaison de by-pass devient plus marquée à mesure que le tiroir se déplace dans le sens F' en fonction de l'augmentation de la pression dans la branche retour.

Le moteur qui vient d'être décrit est du type comprenant trois gorges de distribution, les deuxièmes groupes de conduits de distribution I2, II2 étant "mis en commun" dans la troisième gorge 22. Dans ces conditions, le deuxième tronçon de liaison de by-pass t2 est relié aux deuxièmes groupes de conduits de distribution des première et deuxième séries I2, II2. L'invention s'applique également à un moteur comprenant une gorge de distribution pour chacun des groupes de chaque série de conduits de distribution, auquel cas les conduits de distribution I2 et II2 seraient reliés à des gorges distinctes. Dans ce cas, le deuxième tronçon t2 est au moins relié à l'un des deuxièmes groupes de conduits de distribution, de préférence à celui de la deuxième série, II2.

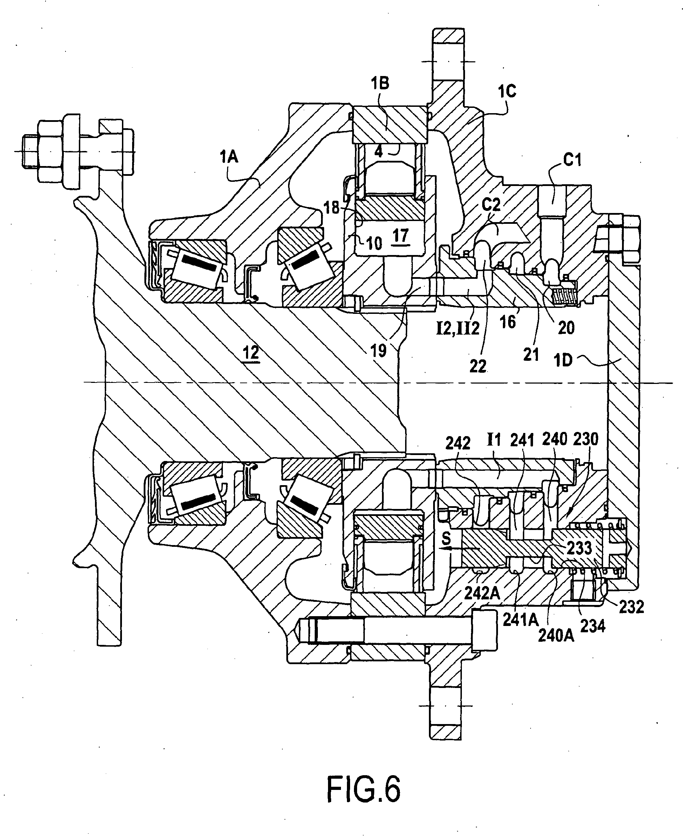

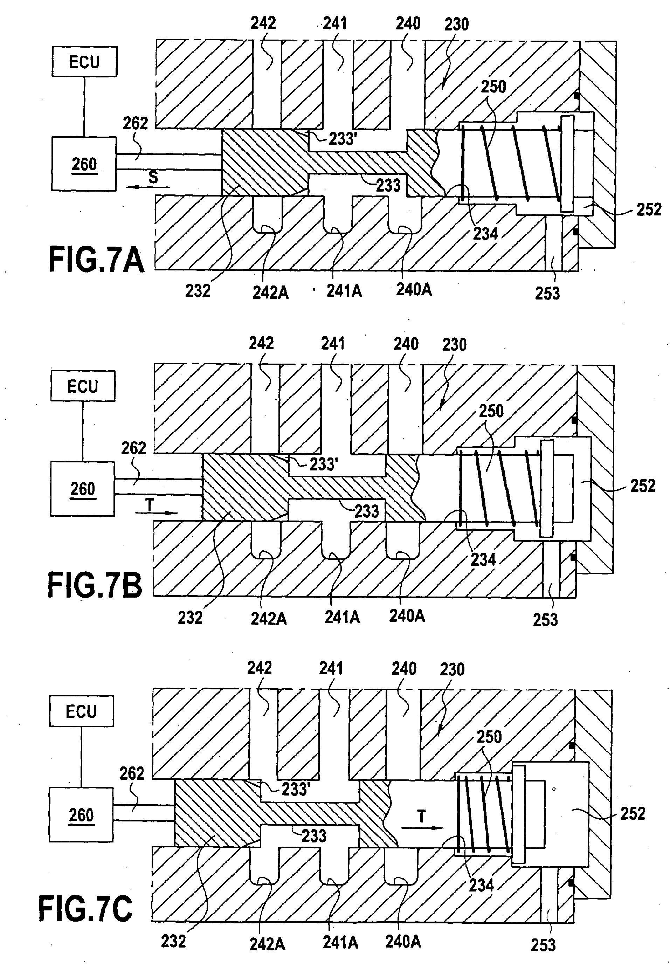

Dans l'exemple qui vient d'être décrit, le sélecteur de cylindrée et le sélecteur de by-pass sont deux sélecteurs distincts. En référence aux figures 6, 7A, 7B et 7C, on décrit maintenant un autre mode de réalisation, dans laquelle ces sélecteurs forment un sélecteur commun.

Globalement, le moteur de la figure 6 est du même type que celui de la figure 1, et les éléments inchangés sont identifiés par les mêmes références. En particulier, le premier conduit principal C1 est relié à la première gorge de distribution 20 à laquelle sont reliés les conduits de distribution du premier groupe de la première série I1, tandis que le deuxième conduit principal C2 est relié à la gorge 22 à laquelle sont reliés les deuxièmes groupes de conduits de distribution I2, II2. Le premier groupe de conduits de distribution de la deuxième série est quant à lui relié à la gorge centrale 21.

Le sélecteur commun 230 comprend un tiroir 232 mobile dans un alésage axial 234 qui présente une première ouverture 240A reliée au premier groupe de conduits de distribution I1 de la première série, une deuxième ouverture 241A reliée au premier groupe de conduits de distribution II1 de la deuxième série et une troisième ouverture 242A reliée aux deuxièmes groupes, de conduits de distribution I2, II2 des première et deuxième séries. L'alésage comprend au moins ces trois ouvertures, sachant que l'ouverture 242A pourrait n'être reliée qu'aux conduits II2, auquel cas une ouverture supplémentaire pourrait être reliée aux conduits I2. Ces liaisons sont réalisées par des conduits de liaison, respectivement 240, 241 et 242 qui relient respectivement les gorges 20, 21 et 22 aux ouvertures 240A, 241A et 242A de l'alésage 234 disposées successivement dans le sens S de déplacement de ce sélecteur vers sa position de petite cylindrée.

Sur la figure 6, le tiroir 232 occupe sa position de grande cylindrée et on voit que la gorge 233 de ce tiroir met alors en communication les gorges de distribution 20 et 21, par les conduits de liaison 240 et 241, tandis que la gorge 22 est isolée des deux autres. Ainsi, les premiers groupes de conduits de distribution I1, II1 sont reliés au premier conduit principal C1, en étant isolés des deuxièmes groupes de conduits de distribution I2, II2 qui sont reliés ensemble par la gorge 22. On comprend que, lorsque le tiroir 232 est déplacé dans le sens S jusqu'à ce que sa périphérie externe masque l'ouverture du conduit de liaison 240 et que sa gorge 233 fasse communiquer entre eux les conduits de liaison 241 et 242, le moteur fonctionne dans sa petite cylindrée puisque le premier groupe de conduits de distribution des deuxièmes séries II1 est alors relié aux deuxièmes groupes de conduits de distribution I2, II2.

La position de grande cylindrée est représentée sur la figure 7A, tandis que la position de la petite cylindrée est représentée sur la figure 7C. Entre ces deux positions, le tiroir 232 peut occuper une position de petite cylindrée à liaison de by-pass restreint, représentée sur la figure 7B.

La liaison de by-pass qui permet le fonctionnement en petite cylindrée est réalisée par une mise en communication des conduits de liaison 241 et 242 par la gorge 233 du tiroir comme on le voit sur la figure 7C. A partir de cette position dans laquelle il permet une liaison de by-pass sensiblement libre, le sélecteur 230 (ou plutôt son tiroir 232) peut être déplacé pour restreindre cette liaison par une restriction. C'est ce que montre la figure 7B, sur laquelle on voit que la liaison de by-pass entre les conduits de liaison 241 et 242 ne s'opère plus que par un bord de la gorge 233 pourvu de sifflets 233'. Ces sifflets sont formés par des encoches 233', qui relient la gorge 233 à la périphérie externe du tiroir du côté de cette gorge éloignée du conduit de liaison 240, et dont la section va en se rétrécissant dans le sens S de déplacement du tiroir vers sa position de grande cylindrée. Dans ces conditions, on comprend que lorsque le tiroir 232 se déplace à partir de sa position de petite cylindrée représentée sur la figure 7C dans le sens T opposé au sens S, il atteint une position intermédiaire représentée sur la figure 7B dans laquelle la communication entre le conduit de liaison 242 et la gorge 233 (et donc la liaison entre les conduits 242 et 241) ne s'opère plus que par les sifflets 233'. La section de ces sifflets étant faible, cette liaison est restreinte.

Dans l'exemple représenté, ainsi qu'il a été indiqué, le moteur est du type à trois gorges de distribution, les deuxièmes groupes de conduits de distribution étant mis en commun dans la gorge 22. En conséquence, dans sa position de by-pass restreint, le sélecteur 230 établit une communication restreinte entre le premier groupe de conduits de distribution de la deuxième série II1 et les deuxièmes groupes de conduits de distribution des premières et deuxièmes séries I2, II2.

Un sélecteur de cylindrée du même type est toutefois possible pour un moteur dans lequel chacun des groupes de conduits de distribution de chaque série est relié à une gorge de distribution distincte (par exemple un moteur à deux cylindrées actives de fonctionnement ayant quatre gorges de distribution respectivement reliées aux conduits de distribution I1, I2, II1 et II2). Dans ce cas, dans la position de petite cylindrée, les deux groupes de conduits de distribution de la deuxième série, II1 et II2 sont mis en commun en étant reliés à une enceinte commune par leur gorge de distribution respective, alors que les deux groupes de conduits de distribution de la première série I1, I2 sont respectivement reliés aux conduits principaux C1 et C2. L'enceinte commune peut être reliée à l'un des conduits principaux, de préférence au conduit principal à la plus basse pression, comme dans FR 2 481 755 ou bien à une enceinte à une pression auxiliaire, comme dans FR 2 606 092.

Comme il a été indiqué, la liaison restreinte est en l'espèce réalisée par des sifflets que présente l'un des bords de la gorge 233. En variante, comme le montre la figure 8, il serait possible d'utiliser un tiroir 332 dont le bord correspondant de la gorge 333 serait formé par un retour 332' présentant une pluralité de perçages 348, mettant en communication la périphérie externe du tiroir avec la gorge 332 (via la partie interne du retour 332'), les dimensions de ces perçages allant en décroissant dans le sens S.

On voit que, dans les deux cas de figure, la restriction de liaison de by-pass est progressive, selon la position du sélecteur commun des figures 6 à 8 ou selon la position du sélecteur de by-pass des figures 1 à 5.

Dans le deuxième mode de réalisation représenté sur les figures 6 à 7C, les moyens de commande du sélecteur commun comprennent, d'une part, une chambre de commande 252 alimentée par un conduit de pilotage 253 pour provoquer un déplacement du sélecteur dans la direction S, vers sa position de petite cylindrée et, d'autre part, un ressort de rappel 250 sollicitant en permanence le tiroir du sélecteur dans le sens T, vers sa position de grande cylindrée. Ces moyens de commande peuvent être de type classique pour commander le déplacement d'un sélecteur de sélection de la cylindrée.

Dans le cas d'espèce, le sélecteur sert également à la restriction de la liaison by-pass ainsi qu'il a été décrit. Pour cela, il est nécessaire de commander un déplacement maîtrisé du sélecteur de sa position de petite cylindrée représentée à la figure 7C vers sa position à by-pass restreint représentée à la figure 7B. Pour cela, des moyens de commande 260 peuvent être prévus, pour commander le sélecteur en fonction de la course d'un organe de commande. Cet organe de commande peut par exemple être le joy-stick servant à la conduite d'un engin entraîné par le moteur équipé du dispositif de l'invention, ou bien un organe d'activation du freinage tel qu'une pédale de frein ou analogues. La commande peut être relayée par une unité électronique de gestion ECU. Par exemple, l'activation d'une commande de freinage peut entraîner le déplacement d'un piston 262 du type représenté schématiquement sur les figures 7A à 7C, pour pousser le tiroir 232 dans le sens T, ce piston étant normalement rétracté pour permettre une sélection classique de la cylindrée, lorsque la liaison de by-pass n'a pas à être restreinte.

Bien que ces moyens de commande soient seulement représentés schématiquement sur les figures 7A à 7C, il va de soi qu'ils s'appliquent également à la commande du déplacement du tiroir 42 du sélecteur de by-pass 40 des figures 1 à 5.

Avantageusement, le dispositif comporte un frein mécanique du moteur (non représenté) qui peut être de tout type connu, utilisant par exemple des disques de friction commandés hydrauliquement et/ou mécaniquement. Dans ce cas, les moyens de commande du freinage du moteur sont avantageusement aptes, lorsque le moteur est en petite cylindrée, à commander successivement une restriction de la liaison de by-pass pour provoquer un premier freinage hydrostatique, et une activation du frein mécanique. Comme on l'a indiqué précédemment, le freinage peut être relayé par une unité électronique de gestion ECU. Dans ce cas, celle-ci connaît l'information selon laquelle le moteur est en petite cylindrée et, lorsque le freinage est commandé, elle peut commander d'abord un freinage hydrostatique puis le compléter par un freinage mécanique.

L'étape de freinage hydrostatique peut quant à elle être commandée de manière particulière. En effet, l'unité électronique de commande ECU peut être paramétrée pour, en fonction de la commande de freinage et de paramètres de fonctionnement du moteur, commander une première étape de freinage hydrostatique opérée par une modification du débit de fluide dans les conduits principaux (en augmentant la pression dans la branche de retour) et, en fonction de la situation de fonctionnement à l'issue de cette première étape, commander une deuxième étape de freinage hydrostatique dans laquelle la liaison de by-pass est restreinte pour augmenter le couple de freinage disponible.

Dans la première étape de freinage hydrostatique, le débit de fluide est en particulier modifié par une action sur la pompe d'alimentation du circuit diminuant sa cylindrée.

Lors d'une commande de freinage hydrostatique, le déplacement du sélecteur de by-pass (sélecteur commun ou sélecteur de by-pass distinct du sélecteur de cylindrée) peut être réalisé de manière à asservir une variable représentative du fonctionnement du véhicule entraînée par le moteur selon une consigne.

En particulier, la variable représentative du fonctionnement du véhicule entraîné par le moteur peut être la pression ou le débit dans l'un des conduits principaux et/ou des canaux intérieurs au moteur, le couple de sortie du moteur, sa vitesse de sortie, le nombre de tours de sa sortie, la vitesse du véhicule, la distance parcourue par ce véhicule, sa position ou sa distance par rapport à une cible, l'accélération ou la décélération du véhicule ou du moteur, ou encore, par exemple, un paramètre de fonctionnement du moteur d'entraînement de la pompe d'alimentation du circuit (nombre de tours, vitesse, couple de ce moteur...), ou une combinaison des paramètres précités.

La variable représentative peut être calculée en fonction de la commande des différents éléments concernés, par l'unité de contrôle électronique ECU, mais le dispositif comprend avantageusement des moyens pour détecter la valeur de cette variable ou des paramètres servant à la calculer.

La consigne servant à l'asservissement peut être mémorisée par des moyens appropriés, et l'unité électronique de gestion précitée peut alors recevoir la valeur détectée et/ou calculée pour la variable représentative, comparer cette valeur à la consigne mémorisée et émettre un signal de commande du sélecteur de by-pass en réponse à cette comparaison. La consigne est choisie pour permettre l'obtention du couple de freinage additionnel permettant un freinage hydrostatique dans de bonnes conditions alors que le moteur est en petite cylindrée active.

Avantageusement, le dispositif comprend, pour émettre le signal de commande du sélecteur de by-pass, un système de régulation de type PID.

La consigne utilisée pour l'asservissement est avantageusement une loi de variation pour la variable représentative du fonctionnement du moteur.

Lorsque l'asservissement est réalisé sur la pression dans la branche retour, celui-ci peut permettre d'éviter un emballement du moteur d'entraînement de la pompe en faisant en sorte que cette pression ne dépasse pas une valeur définie dans un freinage hydrostatique.

L'asservissement utilisé pour commander la restriction de la liaison de by-pass peut avantageusement être utilisé pour des fonctions annexes telles que l'aide au virage d'un engin ayant deux roues motrices d'un même essieu entraînées, chacune, par un moteur équipé d'un dispositif conforme à celui de l'invention, puisque l'asservissement permet d'augmenter le freinage hydrostatique en freinant alors la roue intérieure au virage. Une autre fonction possible est l'équilibrage du freinage avant/ arrière des différentes roues motrices d'un même engin, pour augmenter quand cela s'avère nécessaire le couple de freinage dans un ou plusieurs moteurs d'une roue motrice de manière à équilibrer le freinage sur les différentes roues, ou encore celui du freinage de type ABS.

L'invention s'applique en particulier aux moteurs alimentés en circuit fermé. L'interposition de la restriction sur la liaison de by-pass provoque une perte de charge et, en conséquent, une élévation de la température du fluide hydraulique. Dans ce cas, il importe de dissiper les calories ainsi provoquées, et il est donc avantageux que le circuit soit équipé d'une valve d'échange permettant une redirection d'un fluide prélevé vers un système de refroidissement.

Bien que les dessins qui viennent d'être décrits concernent des moteurs à pistons radiaux, l'invention s'applique également à des moteurs d'un autre type, en particulier aux moteurs Gerotor ayant au moins deux cylindrées distinctes dont une cylindrée peut être court-circuitée par la liaison de by-pass évoquée ci-dessus, avec une mise en re-circulation interne du fluide des conduits ainsi mis en commun. Enfin, on a décrit en référence aux dessins des moteurs ayant deux cylindrées de fonctionnement et un seul tiroir de sélection de la cylindrée, l'invention s'applique bien entendu à des moteurs ayant un nombre de cylindrées supérieur, par exemple à des moteurs ayant trois cylindrées et deux tiroirs de sélection de la cylindrée.

Dans le moteur qui vient d'être décrit à titre d'exemple en référence aux dessins, les deux conduits principaux C1 et C2 sont aptes à être respectivement reliés à chacune des conduites principales L1, L2 d'un circuit qui comprend une source de fluide sous pression apte à alimenter l'une de ces conduites principales et un retour de fluide auquel est reliée l'autre conduite principale. En circuit fermé, cette source de fluide sous pression et ce retour sont chacun des deux orifices respectifs de la pompe. En circuit ouvert, la source de fluide est l'orifice de sortie de la pompe tandis que le retour de fluide est une liaison à un réservoir sans surpression par l'intermédiaire d'un dispositif adapté pour faire monter la pression sur le retour de fluide dans les phases de freinage (par exemple un limiteur de vitesse).

Comme on vient de le voir, dans la position de grande cylindrée du sélecteur de cylindrée, les premiers groupes de conduits de distribution des première et deuxième séries I1, II1 sont reliés à l'un des conduits principaux (C1) et les deuxièmes groupes de conduits de distribution des première et deuxième séries I2, II2 sont reliés à l'autre conduit principal (C2). Dans la position de petite cylindrée du sélecteur de cylindrée, le premier groupe de conduits de distribution de la première série I1 est relié à l'un des conduits principaux (C1), le deuxième groupe de conduits de distribution de la première série I2 est relié à l'autre conduit principal (C2), et le premier groupe de conduits de distribution de la deuxième série II1 et le deuxième groupe de conduits de distribution de la deuxième série II2 sont reliés entre eux par la liaison de by-pass qui vient d'être décrite.

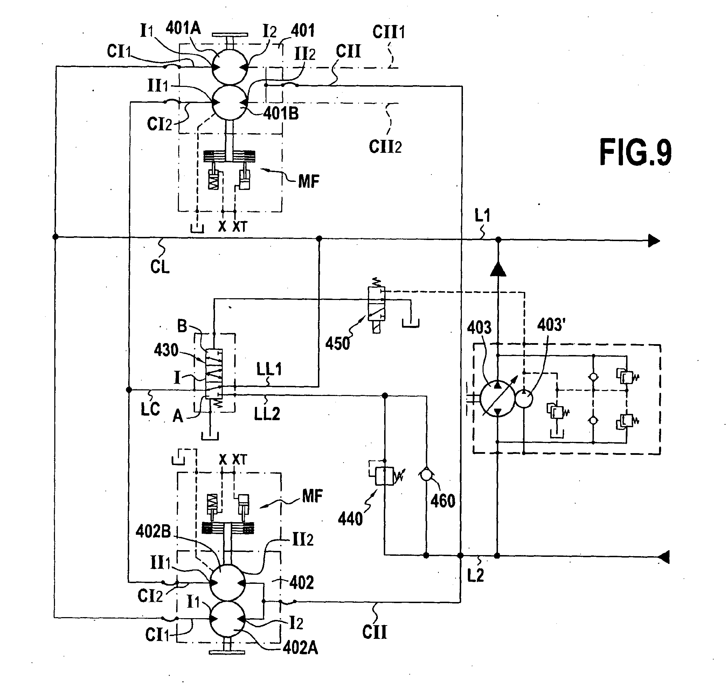

Le circuit de la figure 9 montre le cas où le dispositif de l'invention est extérieur au moteur.

Plus précisément, ce circuit comprend deux moteurs, respectivement 401, 402 ayant chacun deux cylindrées actives de fonctionnement, respectivement symbolisées par les demi-moteurs 401A et 401B, et les demi-moteurs 402A et 402B.

Le circuit comprend une pompe principale 403 qui, le circuit étant de type fermé, a ses deux orifices respectivement reliés à deux conduites principales L1, L2, servant respectivement à l'alimentation et à l'échappement des moteurs 401 et 402 dans le sens préférentiel (marche avant) du véhicule.

Le moteur 401 a deux séries de conduits de distribution. Plus précisément, la première série comprend un premier groupe de conduits I1 et un deuxième groupe de conduits I2, et la deuxième série comprend un premier groupe de conduits II1 et un deuxième groupe de conduits II2. Dans la symbolique adoptée, ces différents groupes correspondent aux orifices respectifs des demi-moteurs 401A et 401B.

Le moteur 401 a un premier groupe de conduits principaux qui comprend un premier sous-conduit principal CI1 auxquels sont reliés les premiers conduits de distribution de la première série I1 et un deuxième sous-conduit principal CI2 auquel sont reliés les premiers conduits de distribution de la deuxième série II1.

Le moteur 401 a encore un deuxième conduit principal CII auquel sont reliés les deuxièmes groupes de conduits de distribution des première et deuxième séries I2, II2. Ce deuxième conduit principal sert à la liaison des conduits de distribution des deuxièmes groupes des première et deuxième séries avec la deuxième conduite principale L2. A la place de ce deuxième conduit principal CII, le moteur pourrait avoir un deuxième groupe de conduits principaux comprenant un premier et un deuxième sous-conduit principal auxquels seraient respectivement reliés les deuxièmes groupes de conduits de distribution des première et deuxième séries I2, II2. Ceci est symbolisé en traits interrompus mixtes sur la figure 9, les deux sous-conduits principaux de ce premier groupe de conduits principaux étant respectivement désignés par CII1 et CII2.

Le circuit comprend un sélecteur de cylindrée 430 qui, dans l'exemple représenté, est dans sa position de grande cylindrée. Ce sélecteur 430 est interposé entre le deuxième sous-conduit principal CI2 du premier groupe de conduits principaux, qui est donc relié à la première conduite principale L1 par l'intermédiaire du sélecteur 430, tandis que le premier sous-conduit principal CI1 de ce groupe est directement relié à la même conduite principale L1 par une conduite de liaison CL et que le deuxième conduit principal CII est quant à lui directement relié à la deuxième conduite principale L2. Le sélecteur de cylindrée 430 présente une première voie reliée à une conduite de liaison LC, elle-même reliée au sous-conduit principal CI2, une deuxième voie reliée à une conduite de liaison LL1 elle-même reliée à la conduite principale L1, et une troisième voie reliée à une conduite de liaison LL2, elle-même reliée à la conduite principale L2.

Dans sa première position extrême A, qui est sa position de grande cylindrée dans laquelle il est rappelé en permanence, le sélecteur 430, relie entre elles ses première et deuxième voies, de sorte que le sous-conduit principal CI2 est relié à la conduite principale L1, tandis que sa troisième voie est isolée des première et deuxième voies. Dans son autre position extrême B, qui est sa position de petite cylindrée dans laquelle il peut être commandé par une électrovalve 450, le sélecteur 430 relie entre elles ses première et troisième voies, de sorte que le sous-conduit principal CI2 est relié à la conduite principale L2, par la conduite de liaison LL2.

Ainsi, dans la position A de grande cylindrée du sélecteur 430, le deuxième conduit principal CII (ou le deuxième groupe de conduits principaux) est relié à la deuxième conduite principale L2 et les deux sous-conduits principaux CI1 et CI2 du premier groupe de conduits principaux sont reliés à la première conduite principale L1 tandis que, dans la position B de petite cylindrée du sélecteur 430, le deuxième conduit principal CII est relié à la deuxième conduite principale L2, le premier sous-conduit principal du premier groupe CI1 est relié à la première conduite principale L1 et le sélecteur 430 relie le deuxième sous-conduit principal CI2 du premier groupe à la deuxième conduite principale L2.

On voit que, entre les positions A et B, le sélecteur présente une position intermédiaire I dans laquelle ses trois voies communiquent entre elles, de sorte que les moteurs sont by-passés.

On voit que sur la conduite de liaison LL2, qui forme la liaison de by-pass pour les conduits de distribution II1 et II2 de la deuxième série, est disposé un réducteur de pression à tarage variable 440 qui forme un sélecteur de by-pass.

On comprend que, lorsque ce sélecteur est dans sa position de repos dans laquelle sa section de passage est maximale, la liaison de by-pass est non restreinte.

Lorsque, en revanche, il est commandé par la pression aval pour réduire cette section de passage, la liaison de by-pass est restreinte.

Un clapet anti-retour 460 autorisant seulement le passage du fluide dans le sens allant de la troisième voie du sélecteur 430 vers la conduite L2 est disposé en dérivation du sélecteur de by-pass 440. En conséquence, le passage du fluide est libre dans ce sens et est seulement restreint, lorsque le sélecteur 440 est commandé, pour limiter le passage du fluide dans le sens allant de la conduite L2 vers le sous-conduit principal CI2. En conséquence, la liaison de by-pass des conduits de distribution de la deuxième série est restreinte seulement dans le cas où la conduite principale L2 est la conduite d'échappement du moteur.

Dans le circuit représenté, la deuxième conduite principale L2 est reliée en permanence aux deuxièmes conduits de distribution des première et deuxième séries, de sorte que le cas où cette conduite correspond à l'échappement en fluide du moteur correspond au sens préférentiel de fonctionnement du moteur, soit en général la marche avant du véhicule. En d'autres termes, la liaison de by-pass peut être restreinte en marche avant du véhicule mais pas en marche arrière de ce dernier, ceci grâce à la présence du clapet anti-retour 460.

Le moteur 402 est analogue au moteur 401. Il comporte en particulier, comme ce dernier, deux séries de conduits de distribution ayant chacune deux groupes I1, II1 (ceux-ci étant respectivement reliés aux sous-conduits principaux CI1 et CI2 du premier groupe de conduits principaux), I2 II2 (ceux-ci étant reliés au deuxième conduit principal CII).

Le deuxième conduit principal CII est relié à la deuxième conduite principale L2, tandis que le premier sous-conduit principal du premier groupe CI1 est relié à la conduite de liaison CL et que le deuxième sous-conduit principal du premier groupe CI2 est relié à la conduite de liaison LC, elle-même reliée à la première voie du sélecteur 430.

On comprend donc que le sélecteur de cylindrée 430 est commun aux deux moteurs de sorte que, dans sa position de grande cylindrée A, il place simultanément ces deux moteurs en grande cylindrée tandis que, dans sa position de petite cylindrée B, il place simultanément les deux moteurs en petite cylindrée.

Les moteurs 401 et 402 comportent chacun des moyens de freinage MF, de type connu en soi. Le circuit comporte en outre une pompe de gavage 403', reliée à ses différents composants de manière connue en soi.

Comme indiqué précédemment à l'égard du moteur 401, le deuxième groupe de conduits principaux de chaque moteur pourrait comprendre deux sous-conduits principaux, respectivement CII1 et CII2. Dans ce cas, dans la position de grande cylindrée du sélecteur de cylindrée, les deux sous-conduits principaux du premier groupe CI1 et CI2 seraient reliés à la première conduite principale L1 du circuit et les deux sous-conduits principaux du deuxième groupe CII1 et CII2 seraient reliés à la deuxième conduite principale L2. En revanche, dans la position de petite cylindrée de ce sélecteur, le premier sous-conduit principal du premier groupe CI1 serait relié à la première conduite principale L1, le premier sous-conduit principal du deuxième groupe CII1 serait relié à la deuxième conduite principale L2, et le sélecteur de cylindrée relierait entre eux le deuxième sous-conduit principal du premier groupe CI2 et le deuxième sous-conduit principal du deuxième groupe CII2 par la liaison de by-pass. Dans ce cas, on peut choisir que, dans la position de petite cylindrée du sélecteur 430, celui-ci relie les deuxièmes sous-conduits principaux des premier et deuxième groupes principaux CI2 et CII2 en les reliant à l'un des premier et deuxième sous-conduits principaux du premier groupe.

Comme indiqué précédemment, le circuit comprend avantageusement deux moteurs hydrauliques analogues, auquel cas le sélecteur de cylindrée et les moyens de restriction de la liaison de by-pass (sélecteur de by-pass 440) sont avantageusement communs à ces moteurs.

Dans l'exemple de la figure 9, le sélecteur de by-pass 440 est un réducteur de pression commandé par la pression aval. Il pourrait toutefois être commandé comme indiqué précédemment en référence aux figures précédentes, en fonction de la course d'un organe de commande. En particulier, le circuit peut être équipé de moyens de commande (Unité Electronique de Commande), commandant successivement une activation de la liaison by-pass et une activation du frein mécanique du ou des moteurs. Ce sélecteur peut être commandé pour asservir le déplacement d'un véhicule entraîné par le ou les moteurs selon une consigne.

## Revendications

1. Dispositif de gestion du fonctionnement d'un moteur hydraulique (1 ; 401, 402) ayant au moins deux cylindrées actives de fonctionnement et apte à être relié aux deux conduites principales, respectivement d'alimentation et d'échappement, le moteur comprenant deux séries de conduits de distribution ayant chacune un premier et un deuxième groupe de conduits de distribution (I1, I2 ; II1, II2), le dispositif de gestion comprenant un sélecteur de cylindrée (30 ; 230 ; 430) apte à occuper au moins une position de grande cylindrée dans laquelle les premiers groupes de conduits de distribution des première et deuxième série (I1, II1) sont reliés à l'une des conduites principales, tandis que les deuxièmes groupes de conduits de distribution des première et deuxième série (I2, II2) sont reliés à l'autre conduite principale, ainsi qu'une configuration de petite cylindrée dans laquelle le premier groupe de conduits de distribution de la première série (I1) est relié à l'une des conduites principales, tandis que le deuxième groupe de conduits de distribution de la première série (I2) est relié à l'autre conduite principale et qu'une liaison de by-pass (t1, t2 ; 241, 233, 242 ; 241, 242, 348 ; LL2) existe entre le premier groupe de conduits de distribution de la deuxième série (II1) et le deuxième groupe de conduits de distribution (II2) de la deuxième série,
**caractérisé en ce qu'**il comprend des moyens de restriction (48 ; 143' ; 233' ; 348 ; 440) susceptibles, dans la configuration de petite cylindrée du sélecteur de cylindrée, de restreindre ladite liaison de by-pass, alors que le premier groupe de conduits de distribution de la première série (I1) est relié à l'une des conduites principales et que le deuxième groupe de conduits de distribution de la première série (I2) est relié à l'autre conduite principale en étant isolé du premier groupe de conduits de distribution de la première série.

2. Dispositif selon la revendication 1, **caractérisé en ce qu'**il comprend un sélecteur de by-pass (40 ; 230 ; 440) disposé dans la liaison de by-pass apte, à partir d'une première position dans laquelle il permet une liaison de by-pass sensiblement libre, à être déplacé pour restreindre ladite liaison par une restriction (48 ; 143' ; 233' ; 348).

3. Dispositif selon la revendication 2, **caractérisé en ce que** la liaison de by-pass comprend un premier tronçon de liaison (t1) apte à être relié au premier groupe de conduits de distribution de la deuxième série (II1) et un deuxième tronçon de liaison (t2) apte à être relié au deuxième groupe de conduits de distribution de la deuxième série (II2) et **en ce que** le sélecteur comprend un tiroir mobile (42 ; 142) disposé dans un alésage (44) présentant au moins une première et une deuxième ouverture (o1, o2) respectivement reliées avec le premier et avec le deuxième tronçon de liaison (t1, t2) de telle sorte que le tiroir est apte, selon sa position, à établir une communication sensiblement libre ou une communication restreinte entre lesdits tronçons.

4. Dispositif selon la revendication 3, **caractérisé en ce que** le tiroir (42) présente un trou borgne (46) relié en permanence à la première ouverture (o1) et une série de perçages (48), dont la section va en décroissant le long du tiroir dans le sens allant vers la première ouverture (o1) et qui raccordent ce trou borgne à la périphérie externe de ce tiroir, **en ce que** le tiroir est apte à occuper une première position dans laquelle au moins un perçage non restreint (48) est en regard avec la deuxième ouverture (o2) pour établir une communication sensiblement libre entre les première et deuxième ouvertures et à occuper au moins une deuxième position dans laquelle la périphérie externe du tiroir obture une partie de la deuxième ouverture pour établir une communication restreinte entre lesdites ouvertures.

5. Dispositif selon l'une quelconque des revendications 1 à 4, **caractérisé en ce qu'**il comporte un sélecteur de cylindrée (30 ; 230 ; 430) apte à occuper une position de grande cylindrée dans laquelle les premiers groupes de conduits de distribution (I1, II1) sont aptes à communiquer entre eux tandis que les deuxièmes groupes de conduits de distribution (I2, II2) sont aptes à communiquer entre eux et à occuper une position de petite cylindrée dans laquelle le premier groupe de conduits de distribution de la deuxième série (II1) est apte à communiquer avec au moins le deuxième groupe de conduits de distribution de la deuxième série (II2).

6. Dispositif selon la revendication 5, **caractérisé en ce que** lesdits deuxièmes groupes de conduits de distribution (II1, II2) sont aptes à communiquer entre eux dans les deux positions du sélecteur de cylindrée.

7. Dispositif selon la revendication 5 ou 6 et l'une quelconque des revendications 2 à 4, **caractérisé en ce que** le sélecteur de cylindrée (30 ; 430) et le sélecteur de by-pass (40 ; 440) sont deux sélecteurs distincts et **en ce que**, dans sa position de petite cylindrée, le sélecteur de cylindrée (30 ; 430) est apte à établir la liaison de by-pass (t1, t2 ; LL2) dans laquelle est disposé le sélecteur de by-pass (40 ; 440).

8. Dispositif selon les revendications 3 et 7 et l'une quelconque des revendications 2 à 6, **caractérisé en ce que**, dans la position de petite cylindrée du sélecteur de cylindrée (30), le premier tronçon de liaison (t1) est relié au premier groupe de conduits de distribution de la deuxième série (II1) et le deuxième tronçon (t2) est relié à au moins le deuxième groupe de conduits de distribution de la deuxième série (II2).

9. Dispositif selon la revendication 5 ou 6 et l'une quelconque des revendications 2 à 4, **caractérisé en ce que** le sélecteur de cylindrée et le sélecteur de by-pass forment un sélecteur commun (230), apte à occuper une position de petite cylindrée à by-pass restreint (figure 7B) dans laquelle ledit sélecteur commun établit une communication restreinte (241, 242, 233' ; 241, 242, 348) entre le premier groupe de conduits de distribution de la deuxième série (II1) et le deuxième groupe de conduits de distribution de la deuxième série (II2).

10. Dispositif selon la revendication 9, **caractérisé en ce que**, dans la position de petite cylindrée à by-pass restreint, le sélecteur commun (230) établit également une communication restreinte entre le premier groupe de conduits de distribution de la deuxième série (II1) et le deuxième groupe de conduits de distribution de la première série (I2).

11. Dispositif selon la revendication 9 ou 10, **caractérisé en ce que** la position de petite cylindrée à by-pass restreint est une position du sélecteur commun (230) qui est intermédiaire entre les positions de grande et de petite cylindrée dudit sélecteur commun.

12. Dispositif selon l'une quelconque des revendications 9 à 11, **caractérisé en ce que** le sélecteur commun (230) comprend un tiroir mobile (232) dans un alésage (234) présentant au moins une première ouverture (240A) reliée au premier groupe de conduits de distribution de la première série (I1), une deuxième ouverture (241A) reliée au premier groupe de conduits de distribution de la deuxième série (II1) et une troisième ouverture (242A) reliée au deuxième groupe de conduits de distribution d'au moins la deuxième série (II2), **en ce que**, dans la position de grande cylindrée (figure 7A), ledit sélecteur commun établit une communication entre lesdites première et deuxième ouvertures (240A, 241A) en isolant ces dernières de la troisième ouverture (242A), et **en ce que**, dans la position de petite cylindrée (figure 7C), le sélecteur commun (230) établit une communication sensiblement libre entre les deuxième et troisième ouvertures (241A, 242A) en isolant ces dernières de la première ouverture (240A) et, dans la position de petite cylindrée à by-pass restreint (figure 7B), le sélecteur commun (230) établit une communication restreinte entre les deuxième et troisième ouvertures (241A, 242A) en isolant ces dernières de la première ouverture (240A).

13. Dispositif selon la revendication 2 et l'une quelconque des revendications 2 à 12, **caractérisé en ce que** la restriction (48, 143 ; 233' ; 348) de la liaison de by-pass est progressive, selon la position du sélecteur de by-pass (40 ; 230).

14. Dispositif selon la revendication 2 et l'une quelconque des revendications 2 à 13, **caractérisé en ce qu'**il comprend des moyens de commande (260) du sélecteur de by-pass aptes à commander ledit sélecteur (40 ; 230) en fonction de la course d'un organe de commande.

15. Dispositif selon l'une quelconque des revendications 1 à 14, **caractérisé en ce qu'**il comporte un frein mécanique du moteur et **en ce qu'**il comporte des moyens de commande du freinage du moteur aptes, lorsque le moteur est en petite cylindrée de fonctionnement, à commander successivement une restriction de la liaison de by-pass et une activation du frein mécanique.

16. Dispositif selon l'une quelconque des revendications 1 à 15, **caractérisé en ce qu'**il comporte des moyens de commande du freinage du moteur aptes, en fonction d'une commande de freinage et de paramètres de fonctionnement du moteur, à commander une première étape de freinage dans laquelle le débit de fluide dans les conduites principales est modifié et, en fonction de la situation de fonctionnement du moteur à l'issue de cette première étape, à commander au moins une deuxième étape de freinage dans laquelle la liaison de by-pass est restreinte.

17. Dispositif selon la revendication 2 et l'une quelconque des revendications 2 à 16, **caractérisé en ce qu'**il comporte des moyens de commande de la position du sélecteur de by-pass aptes, lors d'une commande de freinage, à commander le déplacement dudit sélecteur de manière à asservir une variable représentative du fonctionnement d'un véhicule entraîné par le moteur selon une consigne.

18. Dispositif selon la revendication 17, **caractérisé en ce que** les moyens de commande du sélecteur de by-pass comprennent des moyens pour mémoriser la consigne et une unité de gestion électronique (ECU) apte à recevoir la valeur détectée pour la variable représentative, à comparer cette valeur à la consigne mémorisée et à émettre un signal de commande du sélecteur de by-pass en réponse à cette comparaison.

19. Dispositif selon la revendication 18, **caractérisé en ce qu'**il comprend, pour émettre le signal de commande, un système de régulation du type PID.

20. Dispositif selon l'une quelconque des revendications 17 à 19, **caractérisé en ce que** la consigne est une loi de variation pour la variable représentative du fonctionnement du moteur.

21. Dispositif selon la revendication 2 et l'une quelconque des revendications 2 à 20, **caractérisé en ce que** les deuxièmes groupes de conduits de distribution des première et deuxième série (I2, II2) sont reliés entre eux en permanence, et **en ce que** le sélecteur de by-pass (40) comprend un tiroir mobile (42 ; 142) dont les moyens de commande du déplacement comprennent d'une part une chambre de commande (52 ; 152) reliée au premier groupe de conduits de distribution de la deuxième série (II1) et d'autre part un ressort de rappel (50, 150) d'effet antagoniste à celui de la pression dans ladite chambre.

22. Dispositif selon la revendication 21, **caractérisé en ce qu'**il comprend un clapet anti-retour (54) apte à permettre une liaison non restreinte entre lesdits premier et deuxième tronçons (t1, t2) dans le sens de circulation du fluide à partir du premier groupe de conduits de distribution de la deuxième série (II1) vers les deuxièmes groupes de conduits de distribution (I2, II2).

23. Circuit hydraulique comprenant au moins un moteur hydraulique ayant deux conduits principaux (C1, C2), aptes à être respectivement reliés à chacune des conduites principales (L1, L2), un dispositif de gestion du fonctionnement dudit moteur selon l'une quelconque des revendications 1 à 22, une source de fluide sous pression apte à alimenter l'une des conduites principales, et un retour de fluide auquel est relié l'autre conduite principale, circuit dans lequel, dans la position de grande cylindrée du sélecteur de cylindrée les premiers groupes de conduits de distribution des première et deuxième série (I1, II1) sont reliés à l'un des conduits principaux (C1) et les deuxièmes groupes de conduits de distribution des première et deuxième série (I2, II2) sont reliés à l'autre conduit principal (C2), tandis que, dans sa position de petite cylindrée du sélecteur de cylindrée, le premier groupe de conduits de distribution de la première série (I1) est relié à l'un des conduits principaux (C1), le deuxième groupe de conduits de distribution de la première série (I2) est relié à l'autre conduit principal (C2) et le premier groupe de conduits de distribution de la deuxième série (II1) et le deuxième groupe de conduits de distribution de la deuxième série (II2) sont reliés entre eux par ladite liaison de by-pass (t1, t2 ; 241, 233, 242 ; 241, 242, 348).

24. Circuit hydraulique comprenant au moins un moteur hydraulique (401 ; 402) ayant un premier groupe de conduits principaux comprenant un premier et un deuxième sous-conduit principal (CI1, CI2) auxquels sont respectivement reliés les premiers groupes de conduits de distribution des première et deuxième série (I1, II1), ainsi qu'un deuxième groupe de conduits principaux, comprenant au moins un conduit principal (CII; CII1, CII2) auquel sont reliés les deuxièmes groupes de conduits de distribution des première et deuxième série (I1, II1), un dispositif de gestion du fonctionnement dudit moteur (440) selon l'une quelconque des revendications 1 à 20, une source de fluide sous pression apte à alimenter l'une des conduites principales (L1), et un retour de fluide auquel est reliée l'autre conduite principale (L2), circuit dans lequel, dans la position de grande cylindrée du sélecteur de cylindrée (430), les deux sous-conduits principaux dudit premier groupe (CI1, CI2) sont reliés à la première conduite principale (L1) et le deuxième groupe de conduits principaux (CII) est relié à la deuxième conduite principale (L2), tandis que, dans la position de petite cylindrée du sélecteur de cylindrée, le deuxième groupe de conduits principaux (CII) est relié à la deuxième conduite principale (L2), le premier sous-conduit principal du premier groupe (CI1) est relié à la première conduite principale (L1) et le sélecteur de cylindrée (430) relie le deuxième sous-conduit principal du premier groupe (CI2) à la deuxième conduite principale (L2) par ladite liaison de by-pass (LL2).

25. Circuit hydraulique comprenant au moins un moteur hydraulique (401, 402) ayant un premier groupe de conduits principaux comprenant un premier et un deuxième sous-conduit principal (CI1, CI2) auquel sont respectivement reliés les premiers groupes de conduits de distribution des première et deuxième série (I1, II1), ainsi qu'un deuxième groupe de conduits principaux comprenant un premier et un deuxième sous-conduit principal (CII1, CII2) auquel sont respectivement reliés les deuxièmes groupes de conduits de distribution des première et deuxième série (I2, II2), un dispositif de gestion (440) du fonctionnement dudit moteur selon l'une quelconque des revendications 1 à 20, une source de fluide sous pression apte à alimenter l'une des conduites principales (L1), et un retour de fluide auquel est reliée l'autre conduite principale (L2), circuit dans lequel, dans la position de grande cylindrée du sélecteur de cylindrée (430), les deux sous-conduits principaux dudit premier groupe (CI1, CI2) sont reliés à la première conduite principale (L1) et les deux sous-conduits principaux dudit deuxième groupe (CII1, CII2) sont reliés à la deuxième conduite principale (L2), tandis que, dans la position de petite cylindrée du sélecteur de cylindrée (430), le premier sous-conduit principal du premier groupe (CI1) est relié à la première conduite principale (L1), le premier sous-conduit principal du deuxième groupe (CII1) est relié à la deuxième conduite principale (L2), et le sélecteur de cylindrée relie entre eux le deuxième sous-conduit principal du premier groupe (CI2) et le deuxième sous-conduit principal du deuxième groupe (CII2) par ladite liaison de by-pass.

26. Circuit selon la revendication 25, dans lequel, dans sa position de petite cylindrée, le sélecteur de cylindrée (430) relie les deuxièmes sous-conduits principaux des premier et deuxième groupe de conduits principaux (CI2, CII2) à l'un des premier et deuxième sous-conduits principaux du premier groupe (CI1, CII1).

27. Circuit hydraulique selon l'une quelconque des revendications 24 à 26, comprenant deux moteurs hydrauliques analogues (401, 402) et dans lequel le sélecteur de cylindrée et les moyens de restriction de la liaison de by-pass (440) sont communs aux dits moteurs.

28. Circuit hydraulique selon l'une quelconque des revendications 24 à 27, **caractérisé en ce que** les moyens de restriction de la liaison de by-pass comprennent un sélecteur de by-pass (440) apte à restreindre la circulation du fluide dans ladite liaison dans un sens de circulation, tandis que la circulation de fluide dans l'autre sens de circulation est libre.

## Claims

1. Device for managing the operation of a hydraulic motor (1; 401, 402) having at least two operationally active displacements and able to be connected to the two main ducts, for admission and exhaust respectively, the motor comprising two series of distribution ducts each having a first and a second group of distribution ducts (I1, I2; II1, II2), the management device comprising a displacement selector (30; 230; 430) able to occupy at least a large displacement position in which the first groups of distribution ducts of the first and second series (I1, II1) are connected to one of the main ducts, while the second groups of distribution ducts of the first and second series (I2, II2) are connected to the other main duct, and a small displacement configuration in which the first group of distribution ducts of the first series (I1) is connected to one of the main ducts, while the second group of distribution ducts of the first series (I2) is connected to the other main duct and a by-pass connection (t1, t2; 241, 233, 242; 241, 242, 348; LL2) is provided between the first group of distribution ducts of the second series (II1) and the second group of distribution ducts (II2) of the second series,
**characterised in that** it comprises restriction means (48; 143'; 233'; 348; 440) capable, in the small displacement configuration of the displacement selector, of restricting said by-pass connection when the first group of distribution ducts of the first series (I1) is connected to one of the main ducts and the second group of distribution ducts of the first series (I2) is connected to the other main duct whilst being isolated from the first group of distribution ducts of the second series.

2. Device according to claim 1, **characterised in that** it comprises a by-pass selector (40; 230; 440) arranged in the by-pass connection which is able, from an initial position which allows for a substantially freely open by-pass connection, to be moved in order to restrict said connection by a restriction (48; 143'; 233'; 348).

3. Device according to claim 2, **characterised in that** the by-pass connection comprises a first connecting section (t1) able to be connected to the first group of distribution ducts of the second series (II1) and a second connecting section (t2) able to be connected to the second group of distribution ducts of the second series (II2), and **in that** the selector consists of a drawer (42; 142) arranged in a bore hole (44) having at least a first and a second opening (o1, o2) linked, respectively, with the first and with the second connecting sections (t1, t2) such that the drawer is able, depending on its position, to establish a substantially free communication or a restricted communication between said sections.

4. Device according to claim 3, **characterised in that** the drawer (42) has a blind hole (46) permanently connected to the first opening (o1) and a series of through-holes (48), the section of which decreases along the drawer in the direction of the first opening (o1) and which connect this blind hole to the outer periphery of this drawer, **in that** the drawer is able to occupy a first position in which at least one unrestricted through-hole (48) is opposite the second opening (o2) to establish substantially free communication between the first and second openings and to occupy at least a second position in which the outer periphery of the drawer occludes part of the second opening to establish a restricted communication between said openings.

5. Device according to any one of claims 1 to 4, **characterised in that** it comprises a displacement selector (30; 230; 430) which can occupy a large displacement position in which the first groups of distribution ducts (I1, II1) are able to communicate with each other while the second groups of distribution ducts (I2, II2) are able to communicate with each other and occupy a small displacement position in which the first group of distribution ducts of the second series (II1) is able to communicate with at least the second group of distribution ducts of the second series (II2).

6. Device according to claim 5, **characterised in that** said second groups of distribution ducts (II1, II2) are able to communicate with each other in both positions of the displacement selector.

7. Device according to claim 5 or 6 and any one of claims 2 to 4, **characterised in that** the displacement selector (30; 430) and the by-pass selector (40; 440) are two different selectors and **in that**, in its small displacement position, the displacement selector (30; 430) is able to establish a by-pass connection (t1; t2; LL2) in which the by-pass selector (40; 440) is arranged.

8. Device according to claims 3 and 7 and any one of claims 2 to 6, **characterised in that**, in the small displacement position of the displacement selector (30), the first connecting section (t1) is connected to the first group of distribution ducts of the second series (II1) and the second section (t2) is connected to at least the second group of distribution ducts of the second series (II2).

9. Device according to claim 5 or 6 and any one of claims 2 to 4, **characterised in that** the displacement selector and the by-pass selector form a common selector (230), able to occupy a small displacement position with restricted bypass (Figure 7B) in which said common selector establishes a restricted communication (241, 242, 233'; 241, 242, 348) between the first group of distribution ducts of the second series (II1) and the second group of distribution ducts of the second series (II2).

10. Device according to claim 9, **characterised in that** the small displacement position with restricted bypass, the common selector (230) also establishes a restricted communication between the first group of distribution ducts of the second series (II1) and the second group of distribution ducts of the first series (I2).

11. Device according to claim 9 or 10, **characterised in that** the small displacement position with restricted bypass is a position of the common selector (230) which is in between the positions of large and small displacement of said common selector.

12. Device according to any one of claims 9 to 11, **characterised in that** the common selector (230) comprises a drawer (232) in a bore hole (234) having at least a first opening (240A) connected to the first group of distribution ducts of the first series (I1), a second opening (241A) connected to the first group of distribution ducts of the second series (II1) and a third opening (242A) connected to the second group of distribution ducts of at least the second series (II2), **in that** in the large displacement position (Figure 7A), said common selector establishes a communication between said first and second openings (240A, 241A), isolating these from the third opening (242A) and **in that** in the small displacement position (Figure 7C), the common selector (230) establishes a substantially free communication between the second and third openings (241A, 242A) isolating these from the first opening (240A) and, in the small displacement position with restricted by-pass (Figure 7B), the common selector (230) establishes a restricted communication between the second and third openings (241A, 242A), isolating these from the first opening (240A).

13. Device according to claim 2 and any one of claims 2 to 12, **characterised in that** the restriction (48, 143; 233'; 348) of the by-pass connection is progressive, according to the position of the by-pass selector (40; 230).

14. Device according to claim 2 and any one of claims 2 to 13, **characterised in that** it comprises means of control (260) of the by-pass selector able to operate said selector (40; 230) as a function of the travel of an operating element.

15. Device according to any one of claims 1 to 14, **characterised in that** it comprises a mechanical brake of the motor and **in that** it comprises means of control of the braking of the motor able, when the motor is in small displacement operation, to successively order a restriction of the by-pass connection and activation of the mechanical brake.

16. Device according to any one of claims 1 to 15, **characterised in that** it comprises means of control of the braking of the motor able, as a function of a braking command and motor operation parameters, to order a first step of braking in which the fluid delivery in the main ducts is modified and, as a function of the operational situation of the motor at the end of this first step, order at least a second braking step in which the by-pass connection is restricted.

17. Device according to claim 2 and any one of claims 2 to 16, **characterised in that** it has means for controlling the position of the by-pass selector that are able, when there is a braking command, to control the movement of said selector in order to control a variable representative of the operation of a vehicle driven by the motor according to a setpoint.

18. Device according to claim 17, **characterised in that** the means of control of the bypass selector comprise means to memorise the setpoint and an electronic control unit (ECU) able to receive the value detected for the representative value, compare this value with the setpoint memorised and emit a control signal for the bypass selector in response to this comparison.

19. Device according to claim 18, **characterised in that** it comprises, for emitting the control signal, a PID type regulation system.

20. Device according to any one of claims 17 to 19 **characterised in that** the setpoint is a variation law for the variable representing the motor operation.

21. Device according to claim 2 and any one of claims 2 to 20, **characterised in that** the second groups of distribution ducts of the first and second series (I2, II2) are permanently connected together, and **in that** the by-pass selector (40) comprises a mobile drawer (42; 142) whose movement control means comprise on the one hand a control chamber (52; 152) connected to the first group of distribution ducts of the second series (II1) and on the other a return spring (50, 150) with an antagonistic effect on that of the pressure within said chamber.

22. Device according to claim 21, **characterised in that** it comprises a non-return valve (54) able to allow an unrestricted connection between said first and second sections (t1, t2) in the direction of circulation of the fluid from the first group of distribution ducts of the second series (II1) towards the second groups of distribution ducts (I2, II2).

23. Hydraulic circuit comprising at least a hydraulic motor with two main ducts (C1, C2), able to be connected respectively to each of the main ducts (L1, L2), a device for managing the operation of said motor according to any one of claims 1 to 22, a pressurised fluid source able to feed one of the main ducts, and a fluid return to which the other main duct is connected, in which circuit, in the large displacement position of the displacement selector the first groups of distribution ducts of the first and second series (I1, II1) are connected to one of the main ducts (C1) and the second groups of distribution ducts of the first and second series (I2, II2) are connected to the other main duct (C2), while, in its small displacement position of the displacement selector, the first group of distribution ducts of the first series (I1) is connected to one of the main ducts (C1), the second group of distribution ducts of the first series (I2) is connected to the other main duct (C2) and the first group of distribution ducts of the second series (II1) and the second group of distribution ducts of the second series (II2) are connected to each other by said bypass connection (t1, t2; 241, 233, 242; 241, 242, 348).

24. Hydraulic circuit comprising at least a hydraulic motor (401; 402) having a first group of main ducts comprising a first and a second main sub-duct (CI1, CI2) to which the first groups of distribution ducts of the first and second series (I1, II1) are connected, and a second group of main ducts, comprising at least a main duct (CII; CII1, CII2) to which the second groups of distribution ducts of the first and second series (I1, II1) are connected, a device for managing the operation of said motor (440) according to any one of claims 1 to 20, a pressurised fluid source able to feed one of the main ducts (L1) and a fluid return to which the other main duct is connected (L2), in which circuit, in the large displacement position of the displacement selector (430), the two main sub-ducts of said first group (CI1, CI2) are connected to the first main duct (L1) and the second group of main ducts (CII) is connected to the second main duct (L2), while in the small displacement position of the displacement selector, the second group of main ducts (CII) is connected to the second main duct (L2), the first main sub-duct of the first group (CI1) is connected to the first main duct (L1) and the displacement selector (430) connects the second main sub-duct of the first group (CI2) to the second main duct (L2) via said bypass connection (LL2).

25. Hydraulic circuit comprising at least a hydraulic motor (401, 402) having a first group of main ducts comprising a first and a second main sub-duct (CI1, CI2) to which the first groups of distribution ducts of the first and second series (I1, II1) respectively are connected, and a second group of main ducts, comprising a first and a second main sub-duct (CII1; CII2) to which the second groups of distribution ducts of the first and second series (I2, II2) respectively are connected, a device (440) for managing the operation of said motor according to any one of claims 1 to 20, a pressurised fluid source able to feed one of the main ducts (L1) and a fluid return to which the other main duct is connected (L2), in which circuit, in the large displacement position of the displacement selector (430), the two main sub-ducts of said first group (CI1, CI2) are connected to the first main duct (L1) and the two main sub-ducts of said second group (CII1, CII2) are connected to the second main duct (L2), while in the small displacement position of the displacement selector (430), the first main sub-duct of the first group (CI1) is connected to the first main duct (L1), the first main sub-duct of the second group (CII1) is connected to the second main duct (L2) and the displacement selector connects the second main sub-duct of the first group (CI2) to the second main sub-duct of the second group (CII2) via said bypass connection.

26. Circuit according to claim 25, in which, in its small displacement position, the displacement selector (430) connects the second main sub-ducts of the first and second group of main ducts (CI2, CII2) to one of the first and second main sub-ducts of the first group (CI1, CII1).

27. Hydraulic circuit according to any one of claims 24 to 26, comprising two identical hydraulic motors (401, 402) and in which the displacement selector and the means of restriction of the bypass connection (440) are common to said motors.

28. Hydraulic circuit according to one of claims 24 to 27, **characterised in that** the means of restriction of the bypass connection comprise a bypass selector (440) able to restrict the circulation of fluid in said connection in one direction of circulation, while the circulation of fluid in the other direction of circulation is unrestricted.

## Patentansprüche

1. Vorrichtung zum Verwalten des Funktionierens eines Hydraulikmotors (1; 401, 402), der mindestens zwei aktive Betriebshubräume hat und an zwei Hauptleitungen angeschlossen werden kann, jeweils eine Versorgungs- und eine Ablaßleitung, wobei der Motor zwei Serien von Verteilungsleitungen aufweist, die jeweils eine erste und eine zweite Gruppe von Verteilungsleitungen (11, 12; I11, I12) haben, wobei die Verwaltungsvorrichtung einen Hubraumauswähler (30; 230; 430) aufweist, der mindestens eine Position mit großem Hubraum einnehmen kann, in der die ersten Gruppen von Verteilungsleitungen der ersten und zweiten Serie (11, 111) mit einer der Hauptleitungen verbunden sind, während die zweiten Gruppen von Verteilungsleitungen der ersten und der zweiten Serie (12, I12) mit der anderen Hauptleitung verbunden sind, sowie eine Konfiguration mit kleinem Hubraum, in der die erste Gruppe von Verteilungsleitungen der ersten Serie (11) mit einer der Hauptleitungen verbunden ist, während die zweite Gruppe von Verteilungsleitungen der ersten Serie (12) mit der anderen Hauptleitung verbunden ist und eine Bypaßverbindung (t1, t2; 241, 233, 242; 241, 242, 348; LL2) zwischen der ersten Gruppe von Verteilungsleitungen der zweiten Serie (I11) und der zweiten Gruppe von Verteilungsleitungen (I12) der zweiten Serie existiert,
**dadurch gekennzeichnet, daß** sie Verjüngungsmittel (48; 143'; 233'; 348; 440) aufweist, die in der Konfiguration mit kleinem Hubraum des Hubraumauswählers, die Bypaßverbindung verjüngen können, während die erste Gruppe von Verteilungsleitungen der ersten Serie (11) mit einer der Hauptleitungen verbunden ist, und daß die zweite Gruppe von Verteilungsleitungen der ersten Serie (12) mit der anderen Hauptleitung verbunden ist, während sie von der ersten Gruppe von Verteilungsleitungen der ersten Serie isoliert ist.

2. Vorrichtung nach Anspruch 1, **dadurch gekennzeichnet, daß** sie einen Bypaßauswähler (40; 230; 440) aufweist, der in der Bypaßverbindung angeordnet ist, der ausgehend von einer ersten Position, in der er eine im wesentlichen freie Bypaßverbindung erlaubt, verstellt werden kann, um die Verbindung durch eine Verjüngung (48; 143'; 233'; 348) zu verjüngen.

3. Vorrichtung nach Anspruch 2, **dadurch gekennzeichnet, daß** die Bypaßverbindung einen ersten Verbindungsabschnitt (t1) aufweist, der mit der ersten Gruppe von Verteilungsleitungen der zweiten Serie (I11) verbunden werden kann, und einen zweiten Verbindungsabschnitt (t2), der mit der zweiten Gruppe von Verteilungsleitungen der zweiten Serie (I12) verbunden werden kann, und daß der Auswähler einen beweglichen Schieber (42; 142) aufweist, der in einer Bohrung (44) angeordnet ist, die mindestens eine erste und eine zweite Öffnung (o1, o2) aufweist, die jeweils mit dem ersten und dem zweiten Verbindungsabschnitt (t1, t2) derart verbunden sind, daß der Schieber je nach seiner Stellung eine im wesentlichen freie oder verjüngte Kommunikation zwischen den Abschnitten erstellen kann.

4. Vorrichtung nach Anspruch 3, **dadurch gekennzeichnet, daß** der Schieber (42) ein Sackloch (46) aufweist, das ständig mit der ersten Öffnung (o1) verbunden ist, und eine Reihe von Bohrungen (48), deren Querschnitt entlang des Schiebers in die Richtung abnimmt, die zu der ersten Öffnung (o1) geht, und die dieses Sackloch mit dem Außenumfang dieses Schiebers verbinden, daß der Schieber eine erste Stellung einnehmen kann, in der mindestens eine nicht verjüngte Bohrung (48) der zweiten Öffnung (o2) gegenüber liegt, um eine im wesentlichen freie Kommunikation zwischen der ersten und der zweiten Öffnung zu erstellen, und mindestens eine zweite Stellung einnehmen kann, in der der externe Umfang des Schiebers einen Teil der zweiten Öffnung verschließt, um eine verjüngte Kommunikation zwischen den Öffnungen zu erstellen.

5. Vorrichtung nach einem der Ansprüche 1 bis 4, **dadurch gekennzeichnet, daß** sie einen Hubraumauswähler (30; 230; 430) aufweist, der eine Position mit großem Hubraum einnehmen kann, in der die ersten Gruppen von Verteilungsleitungen (I1, II1) untereinander kommunizieren können, während die zweiten Gruppen von Verteilungsleitungen (12, I12) miteinander kommunizieren und eine Position mit kleinem Hubraum belegen können, in der die erste Gruppe von Verteilungsleitungen der zweiten Serie (II1) mit mindestens der zweiten Gruppe von Verteilungsleitungen der zweiten Serie (II2) kommunizieren kann.

6. Vorrichtung nach Anspruch 5, **dadurch gekennzeichnet, daß** die zweiten Gruppen von Verteilungsleitungen (II1, II2) untereinander in den zwei Stellungen des Hubraumauswählers kommunizieren können.

7. Vorrichtung nach Anspruch 5 oder 6 und einem der Ansprüche 2 bis 4, **dadurch gekennzeichnet, daß** der Hubraumauswähler (30; 430) und der Bypaßauswähler (40; 440) zwei getrennte Auswähler sind, und daß der Hubraumauswähler (30; 430) in seiner Position mit kleinem Hubraum die Bypaßverbindung (t1, t2; LL2), in der der Bypaßauswähler (40; 440) angeordnet ist, erstellen kann.

8. Vorrichtung nach den Ansprüchen 3 und 7 und einem der Ansprüche 2 bis 6, **dadurch gekennzeichnet, daß** der erste Verbindungsabschnitt (t1) in der Position mit kleinem Hubraum des Hubraumauswählers (30) mit der ersten Gruppe von Verteilungsleitungen der zweiten Serie (II1) verbunden ist, und der zweite Abschnitt (t2) mit mindestens der zweiten Gruppe von Verteilungsleitungen der zweiten Serie (II2) verbunden ist.

9. Vorrichtung nach Anspruch 5 oder 6 und einem der Ansprüche 2 bis 4, **dadurch gekennzeichnet, daß** der Hubraumauswähler und der Bypaßauswähler einen gemeinsamen Auswähler (230) bilden, der eine Position mit kleinem Hubraum mit verjüngtem Bypaß (Figur 7B) einnehmen kann, in der der gemeinsame Auswähler eine verjüngte Kommunikation (241, 242, 233'; 241, 242, 348) zwischen der ersten Gruppe von Verteilungsleitungen der zweiten Serie (II1) und der zweiten Gruppe von Verteilungsleitungen der zweiten Serie (II2) erstellt.

10. Vorrichtung nach Anspruch 9, **dadurch gekennzeichnet, daß** der gemeinsame Auswähler (230) in der Position mit kleinem Hubraum mit verjüngtem Bypaß ebenfalls eine verjüngte Kommunikation zwischen der ersten Gruppe von Verteilungsleitungen der zweiten Serie (I11) und der zweiten Gruppe von Verteilungsleitungen der ersten Serie (12) erstellt.

11. Vorrichtung nach Anspruch 9 oder 10, **dadurch gekennzeichnet, daß** die Position mit kleinem Hubraum mit verjüngtem Bypaß eine Position des gemeinsamen Auswählers (230) ist, die zwischen den Positionen mit großem Hubraum und kleinem Hubraum des gemeinsamen Auswählers liegt.

12. Vorrichtung nach einem der Ansprüche 9 bis 11, **dadurch gekennzeichnet, daß** der gemeinsame Auswähler (230) einen beweglichen Schieber (232) in einer Bohrung (234) aufweist, die mindestens eine erste Öffnung (240A) aufweist, die mit der ersten Gruppe von Verteilungsleitungen der ersten Serie (11) verbunden ist, eine zweite Öffnung (241 A), die mit der ersten Gruppe von Verteilungsleitungen der zweiten Serie (II1) verbunden ist und eine dritte Öffnung (242A), die mit der zweiten Gruppe von Verteilungsleitungen mindestens der zweiten Serie (II2) verbunden ist, und daß der gemeinsame Auswähler in der Position mit großem Hubraum (Figur 7A) eine Kommunikation zwischen der ersten und der zweiten Öffnung (240A, 241 A) erstellt, indem er diese Letzteren von der dritten Öffnung (242A) isoliert, und daß der gemeinsame Auswähler (230) in der Position mit kleinem Hubraum (Figur 7C) eine im wesentlichen freie Kommunikation zwischen der zweiten und der dritten Öffnung (241A, 242A) erstellt, indem er diese Letzteren von der ersten Öffnung (240A) isoliert, und daß der gemeinsame Auswähler (230) in der Position mit kleinem Hubraum mit verjüngtem Bypaß (Figur 7B) eine verjüngte Kommunikation zwischen der zweiten und der dritten Öffnung (241 A, 242A) erstellt, indem er diese Letzteren von der ersten Öffnung (240A) isoliert.

13. Vorrichtung nach Anspruch 2 und einem der Ansprüche 2 bis 12, **dadurch gekennzeichnet, daß** die Verjüngung (48, 143; 233'; 348) der Bypaßverbindung je nach der Position des Bypaßauswählers (40; 230) allmählich ist.

14. Vorrichtung nach Anspruch 2 und einem der Ansprüche 2 bis 13, **dadurch gekennzeichnet, daß** sie Mittel (260) zum Steuern des Bypaßauswählers aufweist, die den Auswähler (40; 230) in Abhängigkeit von dem Hub eines Steuerorgans steuern können.

15. Vorrichtung nach einem der Ansprüche 1 bis 14, **dadurch gekennzeichnet, daß** sie eine mechanische Bremse des Motors aufweist, und daß sie Mittel zum Steuern des Bremsens des Motors aufweist, die, wenn sich der Motor im kleinen Betriebshubraum befindet, nacheinander eine Verjüngung der Bypaßverbindung und ein Betätigen der mechanischen Bremse steuern können.

16. Vorrichtung nach einem der Ansprüche 1 bis 15, **dadurch gekennzeichnet, daß** sie Mittel zum Steuern des Bremsens des Motors aufweist, die in Abhängigkeit von einer Bremssteuerung und von Betriebsparametern des Motors einen ersten Bremsschritt steuern können, bei dem der Fluiddurchsatz in den Hauptleitungen geändert wird, und, in Abhängigkeit von der Betriebssituation des Motors nach diesem ersten Schritt, mindestens einen zweiten Bremsschritt steuern können, bei dem die Bypaßverbindung verjüngt ist.

17. Vorrichtung nach Anspruch 2 und einem der Ansprüche 2 bis 16, **dadurch gekennzeichnet, daß** sie Mittel zum Steuern der Position des Bypaßauswählers aufweist, die bei einer Bremssteuerung die Bewegung des Auswählers derart steuern können, daß eine Variable gesteuert wird, die für den Betrieb eines Fahrzeugs, das von dem Motor gemäß einem Sollwert angetrieben wird, repräsentativ ist.

18. Vorrichtung nach Anspruch 17, **dadurch gekennzeichnet, daß** die Mittel zum Steuern des Bypaßauswählers Mittel zum Speichern des Sollwerts und eine elektronische Verwaltungseinheit (ECU) aufweisen, die den Wert empfangen können, der für die repräsentative Variable erfasst wird, diesen Wert mit dem gespeicherten Sollwert vergleichen und ein Steuersignal des Bypaßauswählers als Reaktion auf diesen Vergleich senden können.

19. Vorrichtung nach Anspruch 18, **dadurch gekennzeichnet, daß** sie zum Senden des Steuersignals ein Regelsystem des Typs PID aufweist.

20. Vorrichtung nach einem der Ansprüche 17 bis 19, **dadurch gekennzeichnet, daß** der Sollwert ein Variationsgesetz für die Variable ist, die für den Betrieb des Motors repräsentativ ist.

21. Vorrichtung nach Anspruch 2 und einem der Ansprüche 2 bis 20, **dadurch gekennzeichnet, daß** die zweiten Gruppen von Verteilungsleitungen der ersten und zweiten Serie (I2, II2) ständig untereinander verbunden sind, und daß der Bypaßauswähler (40) einen beweglichen Schieber (42; 142) aufweist, dessen Mittel zum Steuern der Bewegung einerseits eine Steuerkammer (52; 152), die mit der ersten Gruppe von Verteilungsleitungen der zweiten Serie (II1) verbunden ist, und andererseits eine Rückholfeder (50, 150) mit Wirkung entgegen die des Drucks in der Kammer aufweisen.

22. Vorrichtung nach Anspruch 21, **dadurch gekennzeichnet, daß** sie ein Rückschlagventil (54) aufweist, das eine nicht verjüngte Verbindung zwischen dem ersten und dem zweiten Abschnitt (t1, t2) in die Zirkulationsrichtung des Fluids ausgehend von der ersten Gruppe von Verteilungsleitungen der zweiten Serie (II1) zu den zweiten Gruppen von Verteilungsleitungen (I2, II2) erlauben kann.

23. Hydraulikkreislauf, der mindestens einen Hydraulikmotor aufweist, der zwei Hauptleitungen (C1, C2) hat, die jeweils mit jeder der Hauptleitungen (L1, L1) verbunden werden können, eine Verwaltungsvorrichtung des Betriebs des Motors nach einem der Ansprüche 1 bis 22, eine Quelle mit Fluid unter Druck, die eine der Hauptleitungen versorgen kann, und einen Fluidrücklauf, mit dem die andere Hauptleitung verbunden ist, Kreislauf, bei dem in der Position mit großem Hubraum des Hubraumauswählers die ersten Gruppen von Verteilungsleitungen der ersten und der zweiten Serie (11, II1) mit einer der Hauptleitungen (C1) verbunden sind und die zweiten Gruppen von Verteilungsleitungen der ersten und der zweiten Serie (I2, II2) mit der anderen Hauptleitung (C2) verbunden sind, während die erste Gruppe von Verteilungsleitungen der ersten Serie (11) in der Position mit kleinem Hubraum des Hubraumauswählers mit einer der Hauptleitungen (C1) verbunden ist, die zweite Gruppe von Verteilungsleitungen der ersten Serie (12) mit der anderen Hauptleitung (C2) verbunden ist und die erste Gruppe von Verteilungsleitungen der zweiten Serie (II1) und die zweite Gruppe von Verteilungsleitungen der zweiten Serie (II2) untereinander durch die Bypaßverbindung (t1, t2; 241, 233, 242; 241, 242, 348) verbunden sind.

24. Hydraulikkreislauf, der mindestens einen Hydraulikmotor (401; 402) aufweist, der eine erste Gruppe von Hauptleitungen hat, die eine erste und eine zweite Hauptunterleitung (CI1, CI2) aufweist, mit welchen jeweils die ersten Gruppen von Verteilungsleitungen der ersten und der zweiten Serie (I1, II1) verbunden sind, sowie eine zweite Gruppe von Hauptleitungen, die mindestens eine Hauptleitung (CII; CII1; CII2) aufweist, mit der die zweiten Gruppen von Verteilungsleitungen der ersten und der zweiten Serie (11, II1) verbunden sind, eine Verwaltungsvorrichtung des Betriebs des Motors (440) nach einem der Ansprüche 1 bis 20, eine Quelle Fluid unter Druck, die eine der Hauptleitungen (L1) versorgen kann, und einen Fluidrücklauf, mit dem die andere Hauptleitung (L2) verbunden ist, Kreislauf, bei dem die zwei Hauptunterleitungen (CI1, CI2) in der Position mit großem Hubraum des Hubraumauswählers (430) mit der ersten Hauptleitung (L1) verbunden sind und die zweite Gruppe von Hauptverteilungsleitungen (CII) mit der zweiten Hauptleitung (L2) verbunden ist, während die zweite Gruppe von Hauptleitungen (CII) in der Position mit kleinem Hubraum des Hubraumauswählers mit der zweiten Hauptleitung (L2) verbunden ist, die erste Hauptunterleitung der ersten Gruppe (CI1) mit der ersten Hauptleitung (L1) verbunden ist und der Hubraumauswähler (430) die zweite Hauptunterleitung der ersten Gruppe (CI2) mit der zweiten Hauptleitung (L2) durch die Bypaßverbindung (LL2) verbindet.

25. Hydraulikkreislauf, der mindestens einen Hydraulikmotor (401, 402) aufweist, der eine erste Gruppe von Hauptleitungen hat, die eine erste und eine zweite Hauptunterleitung (CI1, CI2) haben, mit der jeweils die ersten Gruppen von Verteilungsleitungen der ersten und der zweiten Serie (11, II1) verbunden sind, sowie eine zweite Gruppe von Hauptleitungen, die eine erste und eine zweite Hauptunterleitung (CII1, CII2) aufweist, mit der jeweils die zweiten Gruppen von Verteilungsleitungen der ersten und der zweiten Serie (I2, II2) verbunden sind, eine Verwaltungsvorrichtung (440) des Betriebs des Motors nach einem der Ansprüche 1 bis 20, eine Quelle Fluid unter Druck, die eine der Hauptleitungen (L1) versorgen kann, und eine Rücklaufleitung, mit der die andere Hauptleitung (L2) verbunden ist, Kreislauf bei dem die zwei Hauptunterleitungen der ersten Gruppe (CI1, C12) in der Position mit großem Hubraum des Hubraumauswählers (430) mit der ersten Hauptleitung (L1) verbunden sind und die zwei Hauptunterleitungen der zweiten Gruppe (CII1, CII2) mit der zweiten Hauptleitung (L2) verbunden sind, während die erste Hauptunterleitung der ersten Gruppe (CI1) in der Position mit kleinem Hubraum des Hubraumauswählers (430) mit der ersten Hauptleitung (L1) verbunden ist, die erste Hauptunterleitung der zweiten Gruppe (CII1) mit der zweiten Hauptleitung (L2) verbunden ist und der Hubraumauswähler die zweite Hauptunterleitung der ersten Gruppe (CI2) und die zweite Hauptunterleitung der zweiten Gruppe (CII2) durch die Bypaßverbindung verbindet.

26. Kreislauf nach Anspruch 25, bei dem der Hubraumauswähler (430) in seiner Position mit kleinem Hubraum die zweiten Hauptunterleitungen der ersten und zweiten Gruppe von Hauptleitungen (CI2, CII2) mit der ersten oder der zweiten Hauptunterleitung der ersten Gruppe (CI1, CII1) verbindet.

27. Hydraulikkreislauf nach einem der Ansprüche 24 bis 26, der zwei analoge Hydraulikmotoren (401, 402) aufweist, und bei dem der Hubraumauswähler und die Mittel zum Verjüngen (440) beiden Motoren gemeinsam gehören.

28. Hydraulikkreislauf nach einem der Ansprüche 24 bis 27, **dadurch gekennzeichnet, daß** die Mittel zum Verjüngen der Bypaßverbindung einen Bypaßauswähler (440) aufweisen, der die Zirkulation des Fluids in der Verbindung in eine Zirkulationsrichtung verjüngen kann, während die Fluidzirkulation in die andere Zirkulationsrichtung frei ist.
